# FASCICULE DE BREVET EUROPEEN

(11) **EP 2 681 946 B1**
(45) Date de publication et mention de la délivrance du brevet: **06.05.2015**
(21) Numéro de dépôt: 12706611.6
(22) Date de dépôt: 02.03.2012
(51) Int. Cl.: H04W 16/14, H04W 28/20, H04W 72/04

(54) **ACQUISITION DE SOUS-BANDES DE FREQUENCE DANS UNE TRAME PAR UN MOBILE DANS UN RESEAU A LARGE BANDE COLOCALISE AVEC UN RESEAU A BANDE ETROITE**
AKQUISITION VON UNTER-FREQUENZBÄNDERN IN EINEM RAHMEN MIT EINEM MOBILTELEFON IN EINEM MIT EINEM SCHMALBANDNETZ KOMBINIERTEN BREITBANDNETZ
ACQUISITION OF SUB-FREQUENCY BANDS IN A FRAME WITH A MOBILE IN A BROADBAND NETWORK COLLOCATED WITH A NARROWBAND NETWORK

(30) Priorité: 04.03.2011 FR 1151767
(43) Date de publication de la demande: 08.01.2014
(73) Titulaire: Airbus DS SAS, 78990 Elancourt (FR)
(72) Inventeur: GRUET, Christophe, F-78180 Montigny Le Bretonneux (FR); GEORGEAUX, Eric, F-78180 Montigny Le Bretonneux (FR)
(74) Mandataire: Bringer, Mathieu
(86) Numéro de dépôt international: PCT/EP2012/053686
(87) Numéro de publication internationale: WO 2012/119964

(56) Documents cités:
- WO-A1-2009/077519
- WO-A2-2008/081309

## Description

La présente invention concerne de manière générale la phase de synchronisation d'un mobile attaché à un réseau à large bande ayant une bande partagée avec un réseau à bande étroite.

Le réseau à large bande ("broadband" en anglais) est par exemple un réseau pour mobiles de la troisième ou quatrième génération défini par le projet 3GPP ("Third Generation Partnership Project" en anglais) basé par exemple sur la technologie E-UTRA ("Evolved-UMTS Terrestrial Radio Access" en anglais), parfois appelé aussi LTE ("Long Term Evolution" en anglais), et supporte des liens radio avec des mobiles du type à accès multiple à multiplexage de fréquences orthogonales OFDMA ("Orthogonal Frequency Division Multiple Access" en anglais). Dans le réseau à large bande, une station de base organise et alloue les ressources radio de trafic offertes à la fois dans le domaine fréquentiel et le domaine temporel sous forme de blocs de ressource dans des trames qui sont partagées de manière variable entre des liens radio actifs avec les mobiles, dits également équipements d'usager, sous la couverture de la station de base. Lorsqu'un mobile s'attache à la station de base, le mobile doit détecter des signaux de synchronisation et un signal de référence pour identifier des ressources radio que la station de base lui attribue pour transmettre et recevoir des données de trafic par des liens descendant et montant. On se référera dans la suite de la description au mode duplex à division de fréquence FDD ("Frequency Division Duplex" en anglais) selon lequel la station de base émet et reçoit dans au moins deux blocs alloués à un mobile, de deux sous-bandes différentes respectivement dans des trames descendantes et montantes.

Le réseau à bande étroite ("narrowband" en anglais) est par exemple un réseau de radiocommunications terrestre privé professionnel à bande étroite PMR ("Professional Mobile Radio" en anglais) par exemple du type DMR ("Digital Mobile Radio" en anglais), TETRA "Terrestrial Trunked Radio" en anglais), TETRAPOL ou P25. Il est utilisé pour des services de sécurité publique. Dans le réseau à bande étroite, les mobiles professionnels sont réunis par groupes afin que tout mobile membre d'un groupe puisse transmettre des données aux autres mobiles membres du groupe et recevoir les données de n'importe quel autre mobile appartenant au groupe à travers l'infrastructure du réseau à bande étroite. Les mobiles d'un groupe ne peuvent communiquer qu'entre eux. Le partage des ressources radio dans une station de base du réseau à bande étroite est réalisé sous forme de sous-bandes de fréquence dont le nombre et les débits sont déterminés pour satisfaire en toute sécurité les besoins en ressources de communication et en couverture radio des mobiles professionnels.

Lorsque le réseau à large bande LTE partage sa bande de fréquence avec le réseau à bande étroite, des sous-bandes de la bande de fréquence du réseau à large bande LTE sont attribuées au réseau à bande étroite afin que les deux réseaux coexistent dans la large bande de fréquence. Le nombre de sous-bandes du réseau LTE attribué au réseau à bande étroite est approximativement identique dans chacun des secteurs d'une station de base, constituant un noeud B du réseau LTE. La position exacte des sous-bandes retirées du réseau LTE et attribuées au réseau à bande étroite dépend du site de la station de base, et est imposée par la planification des fréquences dans le réseau à bande étroite.

Pour faciliter la gestion du réseau LTE, les porteuses attribuées au réseau à bande étroite peuvent être regroupées en des sous-bandes ayant chacune une occupation spectrale inférieure ou égale à celle d'un bloc de ressource dans la trame du réseau LTE. La station de base et les mobiles qui lui sont attachés du réseau à large bande ne peuvent recevoir et émettre des données, y compris de la signalisation, sur des liens descendants et montants dans les sous-bandes de porteuses attribuées au réseau à bande étroite. En d'autres termes, un mobile ou une station de base du réseau LTE ne communique jamais par un bloc de sous-porteuses qui inclut une sous-bande de porteuses attribuée au réseau à bande étroite.

Cependant, les "trous" dans la large bande du réseau LTE créés par les blocs de ressource occupés par des porteuses attribuées au réseau à bande étroite affectent directement la signalisation du réseau LTE, particulièrement la signalisation dans les trames descendantes nécessaire à la synchronisation des mobiles et à l'allocation de blocs de ressource aux mobiles par la station de base du réseau LTE. Les canaux de signalisation affectés dans une trame descendante sont en particulier des canaux physiques comme des signaux de synchronisation primaire PSS ("Primary Synchronization Signal" en anglais) et secondaire SSS ("Secondary Synchronization Signal" en anglais), dits également canaux de synchronisation primaire PSCH ("Primary Synchronization CHannel" en anglais) et secondaire SSCH ("Secondary Synchronization CHannel" en anglais), un signal de référence RS ("Reference Signal" en anglais) utilisés pour la synchronisation et l'estimation du canal radio par un mobile, un canal de diffusion physique PBCH ("Physical Broadcast CHannel" en anglais) utilisé pour des informations spécifiques à une cellule et un canal de contrôle physique de lien descendant PDCCH ("Physical Downlink Control CHannel" en anglais) utilisé pour l'allocation de blocs radio de trafic aux mobiles. Ces canaux de signalisation s'étendent sur plusieurs dizaines à centaines de sous-porteuses en fonction de la largeur de la bande de fréquence du réseau LTE.

Le retrait de sous-bandes dans la large bande du réseau LTE conduit un mobile à ignorer la répartition exacte des sous-bandes dans la large bande utilisées pour émettre de la signalisation dans une trame descendante lors d'une phase de synchronisation et d'attachement. La suppression de groupes d'éléments de ressource radio servant notamment à l'allocation de blocs radio de trafic entrave toute réception de données de trafic par les mobiles.

L'objectif de l'invention est de repérer exactement par un mobile des sous-bandes réservées à un réseau à bande étroite et manquantes dans les trames descendantes émises par une station de base d'un réseau à large à bande afin d'accéder à la signalisation propre à l'allocation de ressource.

A cette fin, un procédé dans un mobile pour acquérir des premières sous-bandes dans au moins une portion d'une large bande de fréquence, une première station de base émettant des trames réparties en temps et dans les premières sous-bandes et supportant un message incluant le nombre de sous-bandes dans la large bande, et étant localisée à proximité d'une deuxième station de base émettant dans des deuxièmes sous-bandes incluses dans la large bande de fréquence et différentes des premières sous-bandes, au moins l'une des deuxièmes sous-bandes étant incluse dans la portion de large bande, et les sous-bandes ayant la même largeur, est caractérisé en ce qu'il comprend dans le mobile
une division d'un signal de référence généré dans le mobile en des sous-séquences générées respectivement associées aux sous-bandes de la large bande dont la largeur est déduite du nombre de sous-bandes dans le message,
une détection d'éléments de ressource inclus à des positions prédéterminées dans toutes les sous-bandes de la portion de large bande pour chaque trame émise par la première station de base,
un groupement des éléments de ressource respectivement détectés dans les sous-bandes de la portion de large bande en des sous-séquences détectées,
une détermination de coefficients représentatifs de corrélations entre les sous-séquences générées et les sous-séquences détectées respectivement associées aux sous-bandes de la portion de large bande, et
une acquisition des positions des premières sous-bandes dans la portion de large bande pour des coefficients associés supérieurs à un seuil prédéterminé et des positions des deuxièmes sous-bandes dans la portion de large bande pour des coefficients associés au plus égaux au seuil prédéterminé.

Le procédé ci-dessus permet au mobile d'acquérir la répartition des premières et des deuxièmes sous-bandes dans la portion de large bande en ne détectant que les éléments de ressource du signal de référence émis dans les premières sous-bandes par la première station de base du réseau à large bande et en ignorant les éléments de ressource du signal de référence qui n'ont pu être émis dans les deuxièmes sous-bandes à cause de la réservation de celles-ci à la deuxième station de base d'un réseau à bande étroite. Le mobile localise précisément les deuxièmes sous-bandes manquantes formant des "trous" dans les trames descendantes pendant la phase de synchronisation lors d'un attachement du mobile à la première station de base. Lorsque la portion de large bande est une bande centrale de la large bande de fréquence supportant des canaux de signalisation, le mobile est ensuite capable de récupérer toute la signalisation nécessaire à l'allocation de blocs de ressource par la première station de base.

Selon une première réalisation, la portion de large bande est la large bande de fréquence elle-même. La détection, le groupement, la détermination et l'acquisition sont appliquées à toutes les sous-bandes de la large bande de fréquence afin d'acquérir les positions des premières sous-bandes dans la large bande pour des coefficients associés supérieurs au seuil prédéterminé et des positions des deuxièmes sous-bandes dans la large bande pour des coefficients associés au plus égaux au seuil prédéterminé.

Selon une deuxième réalisation, ladite portion de large bande est une bande centrale de la large bande de fréquence. La répartition des premières et deuxièmes sous-bandes est également acquise dans des bandes supérieure et inférieure à la bande centrale et composant avec la bande centrale la large bande de fréquence selon les étapes énoncées ci-après.

Dans la première station de base sont transférées des sous-séquences de signal de référence initialement à répartir dans toutes les sous-bandes de la bande supérieure de chaque trame, successivement dans les premières sous-bandes de la bande supérieure de la trame suivant l'ordre croissant des fréquences, et des sous-séquences de signal de référence initialement à répartir dans toutes les sous-bandes de la bande inférieure de chaque trame, successivement dans les premières sous-bandes de la bande inférieure de la trame suivant l'ordre décroissant des fréquences.

Dans le mobile selon la deuxième réalisation, le procédé comprend
une détection des éléments de ressource inclus aux positions prédéterminées dans toutes les sous-bandes des bandes supérieure et inférieure pendant la période de la trame reçue, et un groupement des éléments de ressource respectivement détectés dans les sous-bandes des bandes supérieure et inférieure en des sous-séquences détectées, et
pour chacune des bandes supérieure et inférieure, les étapes récurrentes suivantes pour chaque sous-bande, en commençant par la sous-bande inférieure de la bande supérieure ou par la sous-bande supérieure de la bande inférieure:
une détermination d'un coefficient représentatif de la corrélation entre la sous-séquences générée associée à ladite chaque sous-bande et la sous-séquence détectée dans ladite chaque sous-bande,
une acquisition de la position de ladite chaque sous-bande comme première sous-bande lorsque le coefficient est supérieur à un deuxième seuil prédéterminé, la sous-bande succédant à ladite chaque sous-bande dans la bande supérieure ou inférieure devenant ladite chaque sous-bande pour la récurrence suivante, et
une acquisition de la position de ladite chaque sous-bande comme deuxième sous-bande lorsque le coefficient est au plus égal au deuxième seuil prédéterminé, ladite chaque sous-bande dans la bande supérieure ou inférieure étant maintenue pour la récurrence suivante.

Les positions des premières et deuxièmes sous-bandes dans la large bande de fréquence peuvent être acquises plus précisément et rapidement par l'exécution des étapes supplémentaires suivantes:
une détection du nombre de premières sous-bandes dans la large bande de fréquence dans ledit message, et une validation des premières sous-bandes ayant des positions acquises si le nombre de celles-ci est égal au nombre détecté; ou
une détection des nombres de deuxièmes sous-bandes respectivement dans deux parties complémentaires, telles qu'approximativement des moitiés supérieure et inférieure, de la large bande de fréquence dans ledit message, et une validation des positions acquises des premières et deuxièmes sous-bandes si les nombres de deuxièmes sous-bandes ayant des positions acquises dans la moitié supérieure les parties complémentaires sont respectivement égaux aux nombres détectés de deuxièmes sous-bandes dans les parties complémentaires; ou
une détection des nombres de deuxièmes sous-bandes respectivement dans une bande centrale et des bandes supérieure et inférieure composant la large bande de fréquence dans ledit message, et une validation des positions acquises des premières et deuxièmes sous-bandes si le nombre de deuxièmes sous-bandes ayant des positions acquises dans la bande centrale est égal au nombre détecté de deuxièmes sous-bandes dans la bande centrale, le nombre de deuxièmes sous-bandes ayant des positions acquises dans la bande supérieure est égal au nombre détecté de deuxièmes sous-bandes dans la bande supérieure et le nombre de deuxièmes sous-bandes ayant des positions acquises dans la bande inférieure est égal au nombre détecté de deuxièmes sous-bandes dans la bande inférieure.

Après l'acquisition de la répartition des premières et deuxièmes sous-bandes, le mobile peut remplacer le nombre de sous-bandes dans la large bande de fréquence par le nombre des premières sous-bandes ayant des positions acquises et renuméroter les premières sous-bandes ayant des positions acquises afin que le mobile reconnaissent dans les premières sous-bandes une signalisation spécifique émise et des blocs de ressource alloués par la première station de base.

L'invention concerne aussi un mobile pour acquérir des premières sous-bandes dans au moins une portion d'une large bande de fréquence, une première station de base étant apte à émettre des trames réparties en temps et dans les premières sous-bandes et supportant un message incluant le nombre de sous-bandes dans la large bande, et apte à être localisée à proximité d'une deuxième station de base apte à émettre dans des deuxièmes sous-bandes incluses dans la large bande de fréquence et différentes des premières sous-bandes, au moins l'une des deuxièmes sous-bandes étant incluse dans la portion de large bande, et les sous-bandes ayant la même largeur. Le mobile est caractérisé en ce qu'il comprend
un moyen pour diviser un signal de référence généré dans le mobile en des sous-séquences générées respectivement associées aux sous-bandes de la large bande dont la largeur est déduite du nombre de sous-bandes dans le message,
un moyen pour détecter des éléments de ressource inclus à des positions prédéterminées dans toutes les sous-bandes de la portion de large bande pour chaque trame à émettre par la première station de base,
un moyen pour grouper des éléments de ressource respectivement détectés dans les sous-bandes de la portion de large bande en des sous-séquences détectées,
un moyen pour déterminer des coefficients représentatifs de corrélations entre les sous-séquences générées et les sous-séquences détectées respectivement associées aux sous-bandes de la portion de large bande, et
un moyen pour acquérir des positions des premières sous-bandes dans la portion de large bande pour des coefficients associés supérieurs à un seuil prédéterminé et des positions des deuxièmes sous-bande dans la portion de large bande pour des coefficients associés au plus égaux au seuil prédéterminé.

L'invention concerne encore à un réseau de radiocommunications à large bande comprenant des stations de base et des mobiles aptes à mettre en oeuvre des étapes du procédé de l'invention.

Enfin, l'invention se rapporte à un programme d'ordinateur apte à être mis en oeuvre dans un mobile. Le programme est caractérisé en ce qu'il comprend des instructions qui, lorsque le programme est exécuté dans le mobile, réalisent le procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :
- la figure 1 est un diagramme en temps et fréquence d'une trame descendante LTE connue ;
- la figure 2 est un diagramme en temps et fréquence de la première ou sixième sous-trame de la trame descendante LTE détaillée dans deux sous-bandes inférieures d'une bande centrale ;
- la figure 3 est un diagramme en temps et fréquence d'une zone de la trame descendante LTE commune à de signaux de référence et des canaux PDCCH et PCFICH ;
- la figure 4 est un diagramme en temps et fréquence d'un canal PBCH sur 4 trames descendantes LTE ;
- la figure 5 est un schéma d'une cellule de station de base d'un réseau de radiocommunications à large bande et d'une cellule de station de base d'un réseau de radiocommunications à bande étroite colocalisées selon l'invention ;
- la figure 6 est un bloc-diagramme schématique d'un mobile recevant des trames descendantes "perforées" depuis une station de base dans un réseau de radiocommunications à large bande selon l'invention;
- la figure 7 est un diagramme fréquentiel d'une trame descendante "perforée" selon un exemple d'une première réalisation de l'invention comparativement à une trame descendante LTE connue ;
- la figure 8 est un algorithme du procédé pour acquérir des sous-bandes dans des trames descendantes "perforées" reçues par le mobile du réseau de radiocommunications à large bande, selon la première réalisation;
- la figure 9 est un diagramme fréquentiel d'une trame descendante "perforée" selon un exemple d'une deuxième réalisation de l'invention comparativement à une trame descendante LTE connue ; et
- les figures 10A et 10B sont un algorithme du procédé pour acquérir des sous-bandes dans des trames descendantes "perforées" reçues par le mobile du réseau de radiocommunications à large bande, selon la deuxième réalisation.

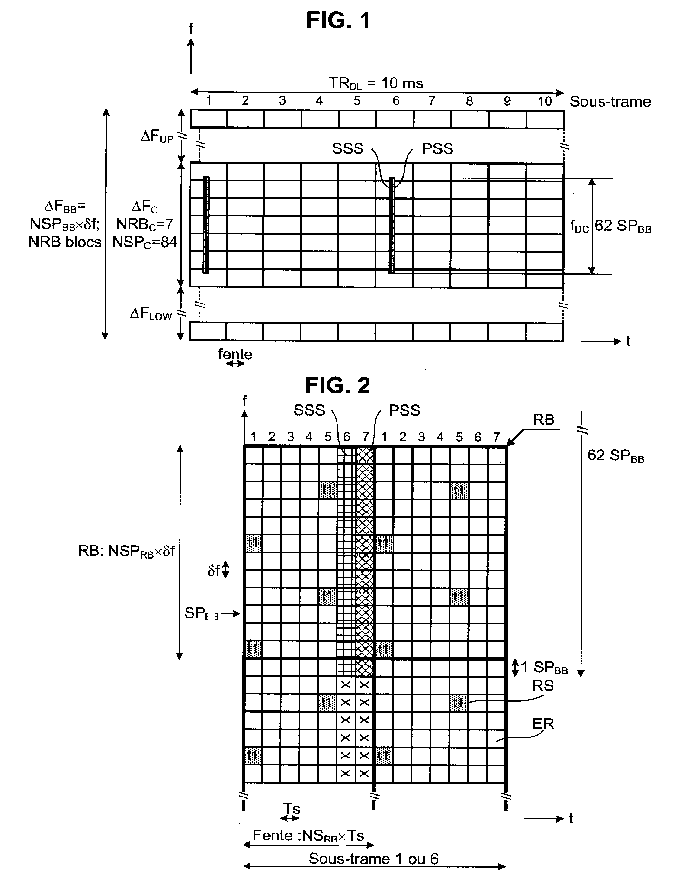

La signalisation dans une trame radio descendante TR_{DL} d'un réseau de radiocommunications cellulaire à large bande R_{BB} en mode duplex à division de fréquence FDD selon la technologie LTE est rappelée ci-après en référence aux figures 1 à 4.

Comme montrée dans les diagrammes en temps t et fréquence f aux figures 1 et 2, le signal descendant structuré en trame descendante TR_{DL} est porté par NSP_{BB} sous-porteuses SP_{BB} symétriquement réparties autour d'une fréquence centrale f_{DC} correspondant à la composante continue en bande de base. L'espacement entre sous-porteuses étant égal à δf, le signal descendant occupe une bande de fréquence utile prédéterminée ΔF_{BB} = NSP_{BB} × δf comprenant NSP_{BB} sous-porteuses. Les NSP_{BB} sous-porteuses sont réparties dans NRB sous-bandes de fréquence consécutives comprenant chacune NSP_{RB} sous-porteuses consécutives SP_{BB} dans la largeur d'un bloc de ressource radio RB. Par exemple, un bloc de ressource comprend NSP_{RB} = 12 sous-porteuses SP_{BB} de largeur δf = 15 kHz. La bande de fréquence utile prédéterminée ΔF_{BB} comprend une bande centrale ΔF_{C} ayant NSP_{C} sous-porteuses symétriquement réparties autour de la fréquence centrale f_{DC} et supportant des canaux de signalisation communs mélangés à des canaux de transport. Comme dans le préambule de la description, on désigne par "canaux de signalisation" les signaux de synchronisation et des canaux de diffusion ou de contrôle ou indicateurs, tels que les canaux PBCH, PDCCH, PCFICH. De part et d'autre de la bande centrale ΔF_{C}, une bande supérieure ΔF_{UP} et une bande inférieure ΔF_{LOW} de taille identique sont assignées à des canaux de transport. Dans le domaine temporel, chaque bloc de ressource s'étend sur NS_{RB} = 6 ou 7 éléments de ressource radio ER selon la longueur d'un préfixe cyclique normal ou étendu, soit NS_{RB} × NSP_{RB} éléments de ressources radio ER par blocs de ressource radio RB. Chaque élément de ressource radio ER est porté par une sous-porteuse SP_{BB} et a une longueur égale à la période Ts d'un symbole à multiplexage par répartition en fréquences orthogonales OFDM ("Orthogonal Frequency Division Multiplexing" en anglais). La trame radio TR_{DL} a une durée de 10 ms et est divisée en 10 sous-trames de 1 ms comprenant 2 fentes temporelles de 0,5 ms.

Le nombre NRB de sous-bandes, ou blocs de ressource dans le domaine fréquentiel, peut être pair ou impair en dépendance de la largeur de la bande de fréquence ΔF_{BB}. Si NRB est pair, la fréquence centrale f_{DC} est située entre deux blocs de ressource RB et la bande centrale ΔF_{C} peut comporter NRB_{C} = 6 blocs de ressource. Si NRB est impair, la fréquence centrale f_{DC} est située au milieu d'un bloc de ressource central et la bande centrale ΔF_{C} peut comporter NRB_{C} = 7 blocs de ressource. L'exemple de trames illustrées dans les figures 1 à 4, 7 et 9 concerne un nombre impair NRB de sous-bandes, par exemple pour une bande de fréquence ΔF_{BB} = 3 MHz, et la bande centrale ΔF_{C} comprend NSP_{C} = 84 sous-porteuses.

Dans la trame TR_{DL}, les canaux de signalisation supportent la synchronisation et des informations système destinées notamment à l'allocation de blocs de ressource de canaux de transport à des mobiles MB_{BB} par des stations de base BS_{BB} dans le réseau à large bande R_{BB}. Les blocs de ressource des canaux de transport dans toute la trame radio descendante TR_{DL} aussi bien sur la largeur de la bande ΔF_{BB} que sur la longueur de la trame sont partagés entre les liens descendants actifs entre les mobiles MB_{BB} et des stations de base BS_{BB} du réseau R_{BB}. La bande centrale ΔF_{C} contient des canaux de signalisation, y compris les signaux de synchronisation, qui sont mélangés à des canaux de transport, les autres bandes ΔF_{UP} et ΔF_{LOW} ne contenant que des canaux de transport. Ainsi des éléments de ressource radio ER à des positions prédéterminées dans la bande centrale ΔF_{C} contiennent des informations des canaux de signalisation, les autres positions de la bande centrale contenant des éléments de ressource de canal de transport pour des données de trafic.

On se référera dans la suite au traitement des canaux de signalisation dans un mobile MB_{BB} lorsque celui-ci cherche à s'attacher à une station de base BS_{BB} dans le réseau R_{BB} afin de se synchroniser avec celle-ci et détecter la position d'au moins un bloc de ressource de canal de transport que la station de base BS_{BB} lui alloue pour recevoir des données de trafic.

Par exemple pour un préfixe cyclique, les positions prédéterminées des signaux de synchronisation secondaire SSS et primaire PSS dans la bande centrale sont définies dans le domaine temporel, par les avant-dernière et dernière périodes de symbole de la première fente des première et sixième sous-trames, et dans le domaine fréquentiel, par les 62 sous-porteuses parmi les 84 qui constituent la bande centrale ΔF_{C}, symétriquement réparties autour de la fréquence centrale f_{DC}. Le signal PSS supporte l'une des 3 séquences orthogonales de Zadoff-Chu qui est la même dans les première et sixième sous-trames et le signal SSS supporte l'une de 168 séquences binaires répartie en deux sous-séquences différentes dans les première et sixième sous-trames. Au début de la phase initiale de synchronisation d'un mobile MB_{BB}, dit également équipement d'usager, dans le réseau à large bande R_{BB}, le mobile surveille l'interface radio entre celui-ci et une station de base BS_{BB}, dite noeud B, du réseau R_{BB} et utilise des corrélations à la fois dans le domaine fréquentiel sur les 62 sous-porteuses de la bande centrale ΔF_{C} et dans le domaine temporel sur chaque fente de la trame pour détecter les séquences de synchronisation émises par la station de base. Cette détection permet au mobile d'acquérir une synchronisation fine et de détecter et mémoriser un identificateur Cell-Id calculé à partir des rangs des séquences détectés dans les signaux PSS et SSS et identifiant une cellule radio couverte par la station de base BS_{BB} à laquelle le mobile tente de s'attacher.

Dans la suite, une cellule radio est assimilée à un secteur lorsque la station de base présente plusieurs secteurs, par exemple trois secteurs.

L'identificateur de cellule Cell-Id est ensuite utilisé dans le mobile pour un débrouillage de diverses informations protégées dans des canaux de signalisation, tels que PBCH, RS, PDCCH, PCFICH, transmises par la station de base BS_{BB} vers le mobile MB_{BB}. Même si quelques blocs de ressource RB sont absents parmi les NRB_{C} = 7 blocs de ressource de la bande centrale ΔF_{C} supportant les signaux de synchronisation PSS et SSS dans les trames, le mobile est capable de détecter les séquences de synchronisation et donc l'identificateur Cell-Id de la cellule radio.

A la suite de la détection des signaux de synchronisation, le mobile MB_{BB} détecte un signal de référence RS ("Reference Signal" en anglais) spécifique à la cellule radio identifiée par l'identificateur détecté Cell-Id. Pour un port d'antenne t1, le signal de référence RS1 est composé d'une séquence spécifique distribuée dans des éléments de ressource ayant des positions fréquentielles et temporelles prédéterminées dans chacun des blocs RB de toute la trame TR_{DL}, par exemple sur les première et septième sous-porteuses de la première période de symbole et les quatrième et dixième sous-porteuses de la cinquième période de symbole de chacun de ces blocs, comme montré dans les éléments de ressource radio notés "t1" à la figure 2.

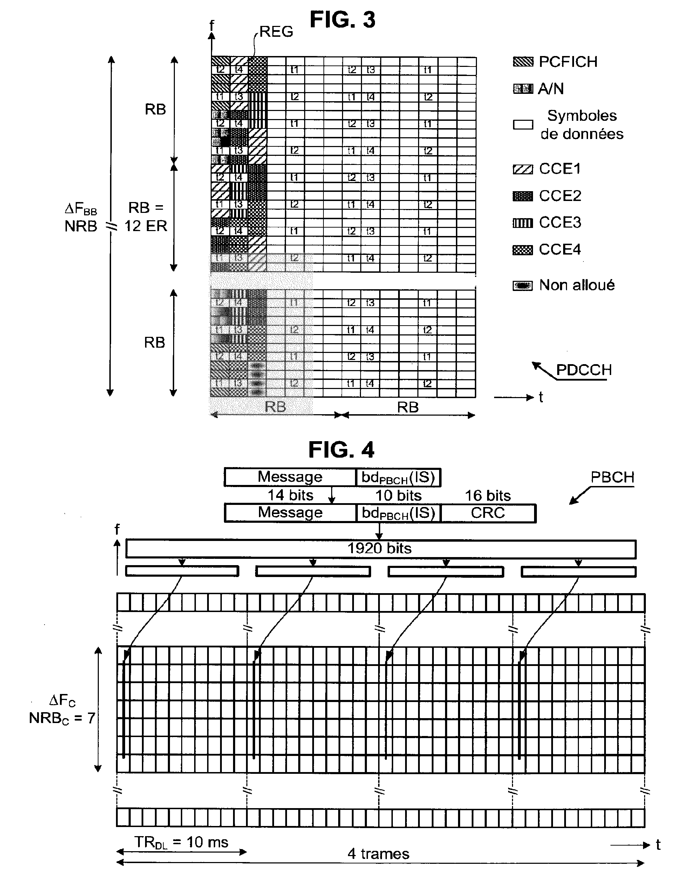

Pour une configuration MIMO, la station de base BS_{BB} émet en diversité de transmission par plusieurs ports d'antenne d'émission, par exemple au nombre de quatre t1 à t4, vers plusieurs ports d'antenne en diversité de réception du mobile MB_{BB}. Par exemple, la station de base émet par 4 ports d'antenne vers 2 ports d'antenne du mobile. Les éléments de ressource des signaux de référence RS1 à RS4 respectivement émis dans des trames par les ports d'antenne t1 à t4 sont répartis respectivement à des positions différentes dans chaque bloc de ressource RB de la trame TR_{DL}, comme montré à la figure 3. Les éléments de ressource des signaux de référence RS1, RS2 et RS3, RS4 sont localisés respectivement à 4 et 2 positions prédéterminées respectives "t1", "t2" et "t3", "t4" dans les blocs RB de la trame TR_{DL}. La trame émise par un port d'antenne comprend des éléments de ressource vides aux positions correspondant aux signaux de référence associés aux autres ports d'antenne.

La longueur de la séquence d'un signal de référence dépend de la largeur de la bande de fréquence utile ΔF_{BB} du réseau R_{BB}, exprimée en nombre de blocs NRB, et de la durée de la trame TR_{DL} exprimée en nombre de sous-trame. Par exemple, pour les premier et deuxième ports d'antenne t1 et t2, la séquence du signal de référence est étalée sur 6RB × 4(ER par RB)x 2(fentes) ×10(sous-trames) = 480 éléments de ressource "t1 ", "t2" pour NRB = 6 comme montré à la figure 3, ou 100 × 4x 2 × 10 = 8000 éléments de ressource ER pour NRB = 100. La séquence spécifique de chaque signal de référence est émise en modulation à saut de phase en quadrature QPSK et est basée sur une séquence pseudo-aléatoire de Gold dont chaque élément dépend des numéros du bloc de ressource dans la bande de fréquence ΔF_{BB} et de la fente dans la trame où l'élément du signal de référence est positionné, du numéro de la période de symbole dans la fente, et de l'identificateur de cellule radio Cell-Id détecté précédemment lors du traitement des signaux SSS et PSS. Grâce au signal de référence RS, le mobile estime la réponse impulsionnelle du canal de transmission entre le port d'antenne d'émission associé de la station de base BS_{BB} et les ports d'antenne de réception du mobile MB_{BB} qui peut recevoir en diversité de réception.

Les séquences des signaux de référence acquises au moyen de générateurs pseudo-aléatoires sont aussi utilisées pour démoduler des canaux de signalisation de la trame descendante, comme les canaux PBCH et PDCCH, et le canal descendant partagé de données de trafic ("payload" en anglais) PDSCH ("Physical Downlink Shared Channel" en anglais) et pour effectuer des mesures notamment de puissance à transmettre à la station de base pour un contrôle de puissance. En particulier, le mobile MB_{BB} enregistre les positions de tous les blocs de ressource pour lesquels il a validé des éléments du signal de référence de manière à traiter notamment les canaux de signalisation.

Puis le mobile MB_{BB} décode et analyse le canal de diffusion physique PBCH ("Physical Broadcast CHannel" en anglais). Comme montré à la figure 4, le canal PBCH émis par la station de base BS_{BB} comprend un message réparti dans les 4 premières périodes de symbole Ts des blocs RB de la deuxième fente succédant aux canaux de synchronisation dans la première sous-trame de la bande centrale ΔF_{C} de chacune de 4 trames descendantes consécutives. Le message comprend initialement 14 bits d'information suivis de 10 bits disponibles supplémentaires bd_{PBCH} ("spare bits" en anglais) et est protégé par la station de base BS_{BB} en le soumettant à une adjonction d'un code à redondance cyclique CRC à 16 bits, un codage avec un code de convolution (turbo-code) de rapport 1/3 dépendant de l'identificateur Cell-Id, une adaptation de débit par répétitions et un étalement sur 4 trames descendantes consécutives TR_{DL}. Au total 480 × 4 = 1920 bits subissent une modulation de phase QPSK en 960 éléments radios de la bande centrale réservés au transport du canal PBCH pour une longueur normale de préfixe. A partir des 14 bits du message décodé dans le canal PBCH, le mobile MB_{BB} acquiert et mémorise:
- le nombre exact NRB de blocs de ressource de la trame descendante TR_{DL} dans le domaine fréquentiel, par exemple NRB = 6, 15, 25, 50, 75, ou 100 pour la configuration LTE avec ΔF_{BB} = 1,4 MHz, 3 MHz, 5 MHz, 10 MHz, 15 MHz, ou 20 MHz, et implicitement le nombre de port d'antenne de la station de base;
- des informations sur la configuration d'un canal hybride physique indicateur d'acquittement et de requête de répétition automatique PHICH ("Physical Hybrid ARQ Indicator CHannel" en anglais) afin d'accéder à l'organisation d'un canal de contrôle physique de lien descendant PDCCH défini ci-dessous; et
- un nombre de trame SFN ("System Frame Number" en anglais) utilisé comme référence temporelle des trames descendantes et indirectement des trames montantes pour la cellule radio jusqu'à une prochaine mise à jour d'informations système dans les trames.

Même si quelques blocs manquent dans la bande centrale ΔF_{C}, la protection relativement élevée associée au canal PBCH est suffisante pour décoder correctement les informations précédentes qu'il contient. En effet la protection appliquée au canal PBCH repose sur 24 bits de données d'origine et 16 bits de code CRC et sur des opérations de codage et répétitions. Par conséquent les informations incluses dans le canal PBCH sont surprotégées.

Après l'acquisition du signal de référence pour chaque port d'antenne et l'acquisition du canal PBCH, le mobile MB_{BB} décode en aveugle un canal de contrôle physique de lien descendant PDCCH ("Physical Downlink Control CHannel" en anglais) en se basant sur les blocs de ressource déterminés dans la bande centrale ΔF_{C} lors du décodage du ou des signaux de référence.

Le canal PDCCH est utilisé par la station de base BS_{BB} pour communiquer des messages d'allocation de ressource radio en temps et fréquence dans la trame pour les liens descendants et montants aux mobiles sous la couverture de la cellule radio de la station de base et ainsi annoncer la délivrance de blocs d'information relatifs à la configuration du réseau R_{BB}, comme des paramètres E-UTRAN ("Evolved-Universal Terrestrial Radio Access Network" en anglais) et EPC ("Evolved Packet Core" en anglais) d'interfaces entre un gestionnaire des ressources radio RRM ("Radio Resource Management " en anglais) dans la station de base et un gestionnaire des mobiles MME ("Mobility Management Entity" en anglais) dans un point d'accès au coeur du réseau R_{BB}.

En se référant à la figure 3, le canal PDCCH ainsi qu'un canal additionnel PCFICH ("Physical Control Format Indicator CHannel" en anglais) sont multiplexés avec des éléments de ressource de signal de référence dans une zone commune. La zone commune s'étend sur un à trois premiers symboles de la première fente de chaque sous-trame de la trame descendante TR_{DL} et sur toute la bande ΔF_{BB} du réseau R_{BB}. Le canal PCFICH comprend 4 groupes REG de 4 éléments de ressource RE chacun dans la première période de symbole de la première fente de chaque sous-trame et indique explicitement le nombre de symboles OFDMA attribués au canal PDCCH dans la zone commune de chaque sous-trame. En outre, les canaux PHICH relatifs à des acquittements et non-acquittements sont également positionnés dans cette zone commune. Le reste des symboles dans la zone commune est attribué au canal PDCCH composé d'une sous-zone commune aux mobiles et de sous-zones individuelles pour un nombre limité de mobiles et est divisé en des petits groupes CCE ("Control Channel Element" en anglais) ayant chacun 9 groupes REG à 4 éléments de ressource, soit 9 × 4 = 36 éléments de ressource RE par groupe CCE. Chaque message d'allocation de ressource radio dans le canal PDCCH comprend un nombre respectif de bits qui sont protégés selon un niveau de protection choisi par la station de base et défini par un mot de code CRC de protection à 16 bits, un codage de convolution de rapport 1/3, des répétitions et une modulation QPSK. Les groupes CCE peuvent être agrégés en 1, 2, 4 ou 8 parmi au plus 16 groupes de contrôle CCE et dépend du niveau de protection choisi. Chaque mobile détecte la position exacte des groupes CCE réservés à la sous-zone commune aux mobiles par un débrouillage dépendant d'un identificateur commun et de la sous-zone individuelle occupée par le groupe CCE alloué au mobile par un débrouillage dépendant d'un identificateur temporaire du mobile. Selon l'exemple d'une sous-trame de la trame descendante TR_{DL} illustré à la figure 3, la zone commune réservée au canal PDCCH comprend 4 groupes CCE1 à CCE4 ayant chacun 9 groupes REG à 4 éléments de ressource et le canal PCFICH comprend 4 groupes REG de 4 éléments de ressource chacun, ces canaux étant multiplexés avec 4 signaux de référence RS1 à RS4 émis respectivement par 4 ports d'antenne t1 à t4 de la station de base.

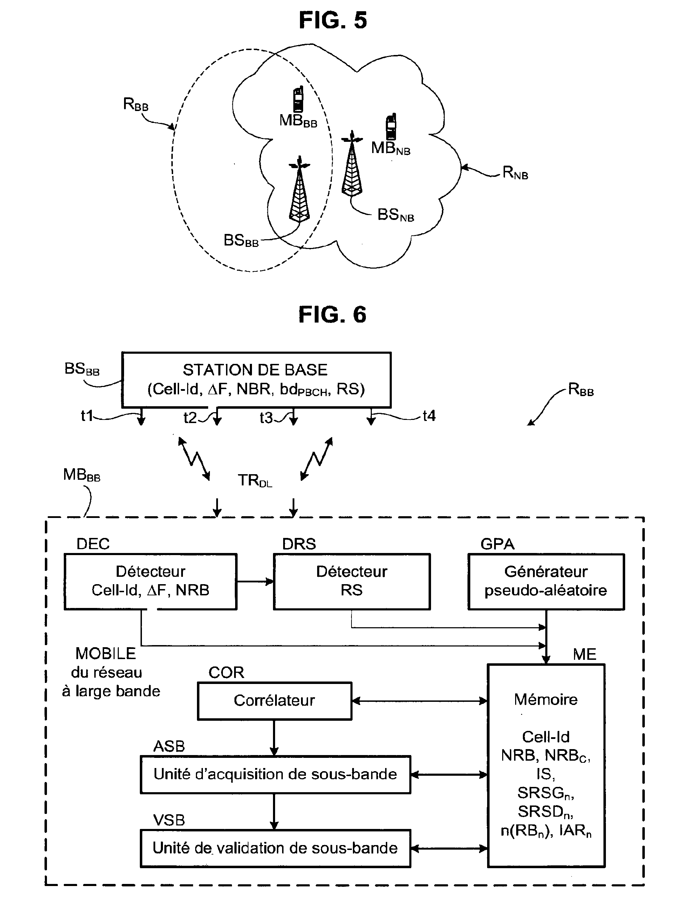

En référence à la figure 5, la couverture de la cellule (ou secteur) de la station de base BS_{BB} du réseau à large bande R_{BB} est colocalisée dans une zone géographique où une ou plusieurs stations de base BS_{NB} d'un réseau de radiocommunications cellulaire à bande étroite R_{NB} du type PMR sont actives.

Une station de base BS_{NB} émet vers des mobiles MB_{NB} du réseau R_{NB} un groupe de porteuses comprises dans une sous-bande étroite BF_{NB} et reçoit des mobiles MB_{NB} un autre groupe de porteuses comprises dans une autre sous-bande étroite BF_{NB}. Par exemple, les porteuses ont une largeur de 10 kHz. Les sous-bandes de porteuses d'émission et de réception BF_{NB} du réseau à bande étroite R_{NB} sont comprises dans une bande de fréquence utile prédéterminée ΔF_{NB} dont au moins une partie ou la totalité est comprise dans la bande de fréquence utile ΔF_{BB} du réseau à large bande R_{BB}. Par exemple, une sous-bande de fréquence de largeur NSP_{RB} × δf = 180 kHz de la bande de fréquence utile ΔF_{BB} correspondant à la largeur d'un bloc de ressource RB du réseau à large bande R_{BB} peut inclure une ou plusieurs sous-bandes de porteuses BF_{NB} dont les porteuses interférent avec une ou plusieurs des NSP_{RB} sous-porteuses comprises dans le bloc de ressource. Des sous-bandes de porteuses BF_{NB} comprises dans un bloc de ressource peuvent être entrelacées.

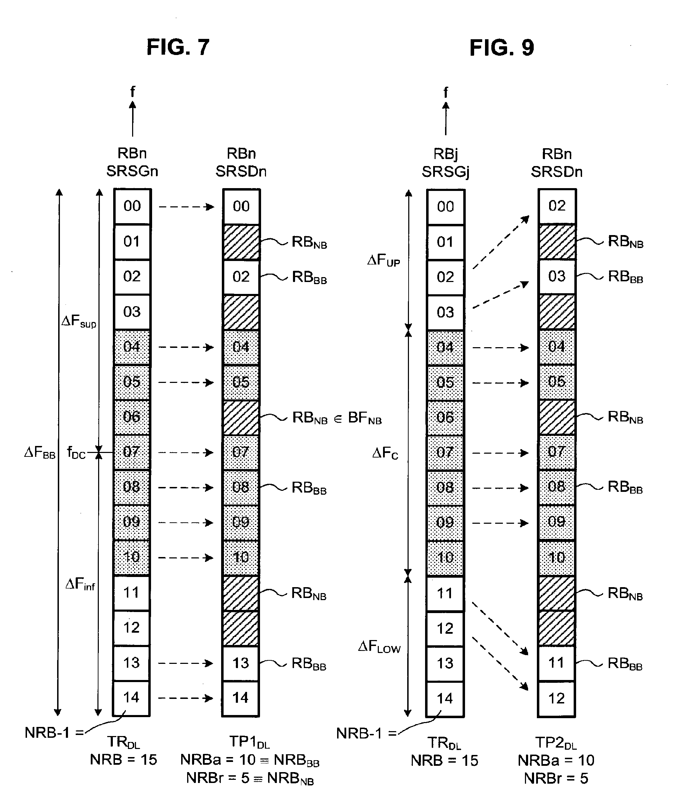

Pour remédier à cet inconvénient, la bande de fréquence ΔF_{BB} du réseau à large bande R_{BB} est partagée avec au moins une partie ou la totalité de la bande ΔF_{NB} du réseau à bande étroite R_{NB}. Comme montré à droite dans la figure 7, au moins une ou plus généralement plusieurs sous-bandes de fréquence correspondant à un nombre prédéterminé NRB_{NB} de blocs de ressource radio prédéterminés RB_{NB} du réseau à large bande R_{BB} sont réservées pour des sous-bandes de porteuses d'émission et/ou de réception BF_{NB} du réseau à bande étroite R_{NB} dans lesquelles des stations de base dans le réseau R_{NB} voisines de la station de base BS_{BB} émettent et/ou reçoivent des signaux à bande étroite. Les sous-bandes réservées RB_{NB} peuvent être pré-positionnées n'importe où dans la bande ΔF_{BB}, par exemple pour une faible partie dans la bande centrale ΔF_{C} et pour une plus grande partie dans les bandes supérieure et inférieure ΔF_{UP} et ΔF_{LOW}. Les sous-bandes étroites RB_{NB} réservées aux stations de base BS_{NB} du réseau R_{NB} sont imposées par la planification des fréquences dans le réseau à bande étroite et la localisation des stations de base BS_{NB} par rapport à la localisation des stations de base BS_{BB}. Un tel partage de la bande de fréquence ΔF_{BB} protège les signaux émis et/ou reçus par les stations de base voisines dans le réseau à bande étroite R_{NB} contre des interférences avec des émissions dans les NRB_{BB} = NRB-NRB_{NB} sous-bandes de fréquence restantes RB_{BB} par la station de base BS_{BB}, et réciproquement.

La station de base BS_{BB} n'émet pas de signaux, y compris de canaux de signalisation, dans les sous-bandes de fréquence RB_{NB} réservées au réseau à bande étroite R_{NB} et comprises dans la bande centrale ΔF_{C}. Cependant, la suppression d'au moins une sous-bande RB_{NB} dans la bande centrale ΔF_{C} pourrait conduire à modifier les caractéristiques des séquences des signaux de synchronisation, des signaux de référence et du canal PBCH selon la technologie LTE et par conséquent les fonctionnalités dans les stations de base et les mobiles du réseau à large bande. En outre, un mobile MB_{BB} du réseau à large bande devrait avoir pré-mémorisé la répartition des sous-bandes RB_{NB} du réseau à bande étroite ce qui est inapplicable puisque d'une part les caractéristiques fréquentielles du réseau à bande étroite sont a priori inconnues du mobile MB_{BB}, le réseau à bande étroite pouvant être présent temporairement ou bien un ou plusieurs autres réseaux à bande étroite pouvant être colocalisés avec le réseau à large bande, et d'autre part le mobile MB_{BB} doit pouvoir fonctionner normalement au regard de la signalisation de la technologie LTE indépendamment de la présence ou non de stations de base BS_{NB} du réseau à bande étroite colocalisées avec la station de base BS_{BB}.

Selon l'invention, les caractéristiques des séquences des signaux de synchronisation, des signaux de référence et plus généralement de tous les canaux de signalisation comme le canal PBCH dans la bande centrale ΔF_{C} selon la technologie LTE sont maintenues dans la station de base BS_{BB} qui continue à établir ces signaux, et canaux sans changement et n'émettre ces signaux et canaux que dans les NRB_{BB} sous-bandes de fréquence RB_{BB}, malgré la présence d'une ou plusieurs sous-bandes RB_{NB} dans la bande centrale ΔF_{C} réservées au réseau à bande étroite R_{NB}.

Un mobile MB_{BB} selon l'invention devant communiquer avec la station de base BS_{BB} ignore a priori la position de chacune des sous-bandes de fréquence RB_{NB} dans la bande ΔF_{BB}, et est capable de se synchroniser avec toute station de base du réseau à large bande R_{BB} colocalisée ou non avec des stations de base du réseau à bande étroite R_{NB}. L'invention apporte des solutions pour que le mobile MB_{BB} acquière les positions des sous-bandes RB_{BB} dans la bande de fréquence ΔF_{BB} du réseau à large bande et utilise les positions acquises des sous-bandes RB_{BB} pour détecter convenablement la signalisation LTE nécessaire à la détermination d'au moins un bloc de ressource de trafic alloué au mobile par la station de base BS_{BB}. Après la phase de synchronisation, le mobile MB_{BB} observe la bande de fréquence ΔF_{BB} dans chaque trame descendante TR_{DL} comme si elle était "perforée" par des "trous" ayant la largeur NSP_{RB} × δf d'un bloc de ressource radio RB et correspondant respectivement aux sous-bandes de fréquence RB_{NB} réservées au réseau à bande étroite, et n'analyse que les NRB_{BB} sous-bandes de fréquence restantes RB_{BB} de la large bande "perforée" ΔF_{BB} selon la technologie LTE en remplaçant le nombre initial NRB de sous-bandes (nombre de blocs de ressource dans le domaine fréquentiel) par le nombre NRB_{BB} de sous-bandes non perturbées par le réseau à bande étroite.

Dans le mobile MB_{BB} montré à la figure 6 sont seulement représentés des blocs fonctionnels assurant des fonctions ayant un lien avec l'invention. Certains de ces blocs fonctionnels peuvent correspondre à des modules de programme d'ordinateur implémentés dans au moins un processeur et/ou à des modules matériels dédiés ou programmables. Le mobile MB_{BB} comprend dans une unité de synchronisation reliée à une interface radio, un détecteur d'identificateur de cellule et de largeur de bande DEC inclus dans une unité de traitement de signaux de synchronisation et de canal PBCH, un générateur pseudo-aléatoire GPA, un détecteur de signal de référence DRS, un corrélateur COR, une unité d'acquisition de position de sous-bande ASB et une unité de validation de sous-bande VSB, et une mémoire ME.

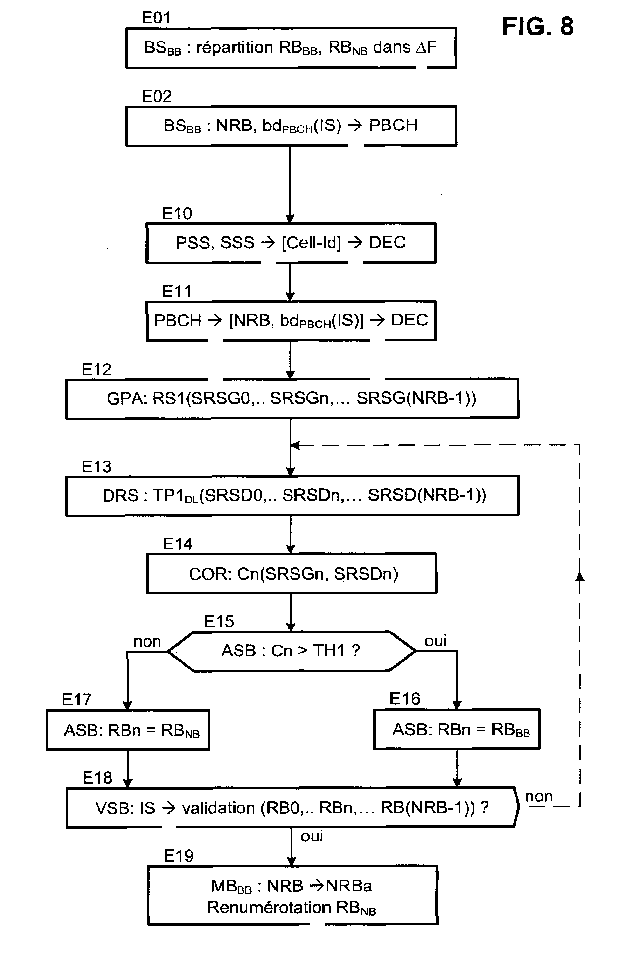

En se référant maintenant à la figure 8, le procédé d'acquisition de sous-bandes selon la première réalisation comprend des étapes E10 à E19 qui sont exécutées pour des trames descendantes "perforées" TP1_{DL} reçues dans le mobile MB_{BB} lors d'une phase de synchronisation. Dans cette première réalisation, la station de base BS_{BB} fonctionne selon la technologie LTE décrite précédemment avec les quelques modifications suivantes établies à des étapes initiales E01 et E02 précédant les étapes E10 à E19.

A l'étape E01, la station de base BS_{BB} pré-mémorise les caractéristiques du partage de la bande de fréquence ΔF_{BB} afin que l'interface radio de la station de base n'émette aucun signal dans les sous-bandes RB_{NB} réservées au réseau à bande étroite R_{NB} et formant des "trous" dans la bande utile ΔF_{BB} et émette des trames "perforées" TP1_{DL}. Selon un exemple, la figure 7 montre une trame connue LTE TR_{DL} comprise dans une bande ΔF_{BB} de largeur NRB = 15 blocs de ressource RB et ayant une bande centrale ΔF_{C} de largeur NRB_{C} = 7 blocs de ressource RB, comparativement à une trame "perforée" TP1_{DL} selon l'invention ayant un "trou" dans la bande centrale ΔF_{C}, deux "trous" séparés dans la bande supérieure ΔF_{UP} et deux "trous" contigus dans la bande inférieure ΔF_{LOW}, les trous correspondant à des sous-bandes RB_{NB}. Par convention, les sous-bandes sont numérotées 00 à NRB-1 suivant l'axe des fréquences décroissantes. Selon la figure 7, la station de base BS_{BB} n'émet que les contenus des sous-bandes RB_{BB} numérotées 00, 02, 04, 05, 07, 08, 09, 10, 13 et 14 de la trame connue LTE aux mêmes positions dans la trame "perforée" TP1_{DL}.

La station de base BS_{BB} continue à établir sans changement les séquences des signaux de synchronisation SSS et PSS et des signaux de référence RS et les 14 bits utiles du message du canal PBCH dans la bande centrale ΔF_{C}. En particulier, les éléments de ressource ER de signaux de référence RS1 à RS4 associés aux ports d'antenne t1 à t4 de la station de base BS_{BB} sont distribués dans tous les blocs de ressource physiques et seuls ceux inclus dans des blocs de ressource correspondant aux sous-bandes RB_{NB} ne sont pas émis afin de ne pas perturber le réseau à bande étroite RB_{B}.

A l'étape E02, la station de base introduit une information supplémentaire IS dans les 10 bits disponibles bd_{PBCH} du message à 24 bits du canal PBCH qui servent à valider notamment des "trous" dans la bande ΔF_{BB} détectés par le mobile MB_{BB} et devant correspondre respectivement aux sous-bandes RB_{NB} réservées au réseau à bande étroite R_{NB}.

Au début de la phase de synchronisation à l'étape E10, le détecteur DEC dans le mobile MB_{BB} détecte l'identificateur Cell-Id de la cellule radio couverte par la station de base BS_{BB} dans les signaux de synchronisation PSS et SSS dont les séquences sont réparties dans les sous-bandes restantes RB_{BB} de la bande centrale ΔF_{C} dans la trame descendante TP1_{DL} L'identificateur Cell-Id est détecté en utilisant des corrélations à la fois dans le domaine temporel sur chaque fente de la trame TP1_{DL} et dans le domaine fréquentiel sur tous les blocs et donc sur toutes les sous-bandes de la bande centrale ΔF_{C} puisque le mobile ignore les positions des sous-bandes RB_{NB} réservées au réseau à bande étroite R_{NB}. L'identificateur Cell-Id est enregistré dans la mémoire ME du mobile.

Puis à l'étape E11, le détecteur DEC décode le canal de diffusion physique PBCH émis périodiquement dans les sous-bandes centrales de 4 trames descendantes consécutives TP1_{DL} utilisées par la station de base BS_{BB}. Le canal de diffusion physique PBCH est décodé sur la base de l'identificateur de cellule Cell-Id détecté dans les signaux de synchronisation SSS et PSS. Le mobile MB_{BB} extrait du message à 24 bits décodé dans le canal PBCH le nombre NRB de sous-bandes d'une trame descendante TR_{DL} dont il déduit la largeur de la bande de fréquence ΔF_{BB} utilisée par la station de base BS_{BB} et le nombre NRB_{C} de sous-bandes supportant les canaux de signalisation communs dans la bande centrale ΔF_{C}. Le mobile MB_{BB} extrait également les informations supplémentaires IS dans les bits disponibles bd_{PBCH} du message décodé. Les paramètres NRB, NRB_{C} et IS sont enregistrés dans la mémoire ME du mobile.

Les éléments de ressource ER des signaux de référence RS1 à RS4 associés aux ports d'antenne t1 à t4 de la station de base BS_{BB} sont distribués dans tous les blocs de ressource des NRB sous-bandes, et seuls les éléments de ressource des signaux de référence inclus dans les sous-bandes RB_{BB} réservées au réseau à large bande R_{BB} sont réellement émis dans les trames TP1_{DL} par la station de base BS_{BB}. La recherche des sous-bandes RB_{BB} est identique par rapport à n'importe lequel des signaux de référence RS1 à RS4 Les étapes suivantes sont basées par exemple sur le signal de référence RS1 du premier port d'antenne obligatoire t1.

A l'étape E12 succédant à la détection des signaux de synchronisation SSS et PSS et du canal PBCH, le générateur pseudo-aléatoire GPA dans le mobile MB_{BB} génère les éléments de la séquence spécifique du signal de référence RS1 sur la base des positions de ces éléments dans une trame LTC définie par l'identificateur Cell-Id et les nombres et NRB et NBR_{C} mémorisés à l'étape E10 et E11. La séquence générée du signal RS1 est divisée en NRB sous-séquences de référence SRSGn, avec 0 ≤ n ≤ NRB-1 selon la convention de numérotage de sous-bande précitée. Les sous-séquences de référence SRSGn sont enregistrées en association avec l'indice n dans la mémoire ME. La sous-séquence SRSGn est composée des éléments ordonnés de la séquence générée du signal de référence RS1 et devant être inclus dans les 20 blocs de ressource RB de la sous-bande RBn d'une trame LTE TR_{DL} pour la bande de fréquence utile ΔF_{BB} définie par le nombre de bloc NRB.

Puis à l'étape E13, le détecteur DRS détecte et échantillonne les éléments de ressource ER situés aux positions des éléments du signal de référence RS1 dans toutes les sous-bandes de la bande de fréquence ΔF_{BB} pendant la période de la trame descendante TP1_{DL} reçue par le mobile MB_{BB}. Les éléments détectés du signal RS1 contenus dans chaque sous-bande RBn de la trame TP1_{DL}, avec 1 ≤ n ≤ NRB, sont groupés successivement en une sous-séquence de référence détectée SRSDn qui est enregistrée dans la mémoire ME.

A l'étape E14, le corrélateur COR détermine un coefficient de corrélation Cn pour chaque couple de sous-séquences de référence générée et détectée SRSGn et SRSDn. L'unité d'acquisition de position de sous-bande ASB compare chacun des coefficients de corrélation C0 à C(NRB-1) à un seuil prédéterminé TH1 à l'étape E15. Si le coefficient de corrélation Cn excède le seuil TH1, l'unité ASB accepte la sous-bande RBn comme l'une des sous-bandes RB_{BB} dans laquelle la station de base BS_{BB} émet et aucune station BS_{NB} du réseau à bande étroite R_{NB} n'émet, et écrit dans la mémoire ME le numéro n correspondant à la position de la sous-bande acceptée RBn dans la bande ΔF_{BB}, à l'étape E16. Si Cn ≤ TH1, l'unité ASB rejette la sous-bande RBn comme l'une des sous-bandes RB_{NB} réservées au réseau à bande étroite R_{NB} dans lesquelles la station de base BS_{BB} n'émet pas, et écrit dans la mémoire ME le numéro n correspondant à la position de la sous-bande RBn rejetée de la bande ΔF_{BB}, à l'étape E17. En effet, le signal émis dans une sous-bande RB_{NB} par les stations de base BS_{NB} du réseau à bande étroite présente a priori une périodicité différente des trames TP1_{DL} et des éléments relativement instables situés aux positions correspondant à des éléments du signal de référence a priori différents. L'unité ASB inscrit le numéro "n" de la position de chaque sous-bande RBn acceptée ou rejetée en association avec un bit indicateur d'acceptation/rejet IARn dans la mémoire ME et y accumule au fur et mesure les acceptations et rejets des sous-bandes en un nombre NRBa de sous-bandes acceptées et un nombre NRBr de sous-bandes rejetées pour la trame reçue TP1_{DL}.

Cependant, si le canal de propagation du signal de référence RS1 pour la sous-bande RBn est perturbé, par exemple par des signaux parasites et/ou de multiple réflexions et/ou par un masquage partiel de la cellule de la station de base BS_{BB}, le coefficient de corrélation Cn pour au moins une sous-bande RBn peut être à tort inférieur au seuil TH1. Les informations supplémentaires IS dans les 10 bits disponibles bd_{PBCH} du message du canal PBCH sont destinées à parfaire les décisions de l'unité ASB de manière à valider définitivement la position des sous-bandes acceptées RB_{BB} et leur nombre NRBa et la position des sous-bandes rejetées RB_{NB} et leur nombre NRBr, à l'étape E18. Pour cette validation, l'unité de validation de sous-bande VSB dans le mobile peut être adaptée à l'une ou plusieurs des quatre variantes suivantes des informations supplémentaires IS en dépendance de la largeur de la bande de fréquence utile ΔF_{BB} utilisée par la station de base BS_{BB} et donc du nombre de blocs NRB et en dépendance de comparaisons d'indicateurs inclus dans les informations supplémentaires IS et des nombres NRBa et NRBr de sous-bandes acceptées et rejetées par l'unité ASB.

La première variante est relative à un nombre de bloc NRB égal à 6. L'information supplémentaire IS comprend les 6 bits de poids fort des 10 bits disponibles bd_{PBCH} dont les rangs correspondent aux numéros 1 à 6 des sous-bandes dans la bande ΔF_{BB}. Un premier état "1" d'un bit d'information supplémentaire indique que la sous-bande respective RB_{BB} est occupée par des symboles émis par la station de base BS_{BB}. Un second état "0" d'un bit d'information supplémentaire indique que la sous-bande respective RB_{NB} est réservée au réseau à bande étroite R_{NB}. Dans cette première variante, les étapes E12 à E17 ne sont pas exécutées et l'unité de validation VSB inscrit les bits d'information supplémentaire, en tant que bits indicateurs d'acceptation/rejet IARn, respectivement en association avec leurs rangs, en tant que numéros de position "n" des sous-bandes RBn dans la mémoire ME.

La deuxième variante est relative à des valeurs du nombre de bloc NRB au moins égales à 15 pour la configuration LTE avec ΔF_{BB} = 3 MHz. L'information supplémentaire IS comprend les 7 bits de poids fort des 10 bits disponibles bd_{PBCH} pour indiquer le nombre NRB_{BB} de sous-bandes réellement utilisées dans la bande ΔF_{BB} par la station de base BS_{BB}. Le nombre NRB_{BB} peut être au maximum égal à 100 < 2⁷-1 pour la configuration LTE avec ΔF_{BB}= 20 MHz. Dans cette deuxième variante, l'unité de validation VSB compare les nombres NRB_{BB} et NRBa, et s'ils sont égaux, valide les positions des sous-bandes acceptées et rejetées. Dans le cas contraire, les étapes E12 à E18 sont répétées pour au moins un autre signal de référence RS2 à RS4, par exemple le signal RS2, lorsque la station de base BS_{BB} émet en diversité par plusieurs ports d'antenne. Si les nombres NRB_{BB} et NRBa ne sont pas égaux pour l'un des signaux de référence RS1 à RS4, les étapes E13 à E18 sont répétées pour la trame suivante TP1_{DL}. Si après un nombre prédéterminé de trames successives analysées, l'identité NRB_{BB} = NRBa n'est pas validée, le mobile MB_{BB} tente de s'attacher à une autre station de base du réseau R_{BB}.

La troisième variante est aussi relative aux valeurs de NRB au moins égale à 15. L'information supplémentaire IS comprend les 10 bits disponibles bd_{PBCH} dans le message du canal PBCH. Les 10 bits bd_{PBCH} sont divisés en des premier et second indicateurs à 5 bits indiquant des nombres de sous-bandes RB_{NB} incluses dans deux parties complémentaires de la bande utile ΔF_{BB}. Selon l'exemple montré à la figure 7, le premier indicateur indique le nombre NRB_{NB,sup} de sous-bandes RB_{NB} comprises dans la "moitié" supérieure ΔFₛᵤₚ de la bande utile ΔF_{BB}, y compris la sous-bande incluant la fréquence centrale f_{DC} lorsque le nombre NRB de sous-bandes dans la bande de fréquence ΔF_{BB} est impair (figure 7), et est comparé par l'unité VSB au nombre de sous-bandes rejetées NRBrₛᵤₚ comptées dans la "moitié" supérieure de la bande ΔF_{BB}. Le second indicateur indique le nombre NRB_{NB,inf} de sous-bandes RB_{NB} comprises dans la "moitié" inférieure ΔF_{inf} de la bande utile ΔF_{BB}, non compris la sous-bande incluant la fréquence centrale f_{DC} lorsque le nombre NRB est impair (figure 7), et est comparé par l'unité VSB au nombre de sous-bandes rejetées NRBr_{inf} comptées dans la "moitié" inférieure de la bande ΔF_{BB}. Bien que les indicateurs soient au plus égal à 2⁵-1 = 31 et donc soient inférieurs à la moitié NRB/2 du nombre de blocs de ressource dans la bande ΔF_{BB} pour la configuration LTE avec ΔF_{BB} égale à 15 MHz ou 20 MHz, un maximum de sous-bandes rejetées de 2/3 environ du nombre de sous-bandes dans la bande ΔF_{BB} pour une occupation par le réseau à bande étroite R_{NB} n'est pas atteint en pratique. Dans cette troisième variante, l'unité VSB valide les positions des sous-bandes acceptées et rejetées si les nombres NRB_{NB,sup} et NRBrₛᵤₚ sont égaux et les nombres NRB_{NB,inf} et NRBr_{inf} sont égaux. Dans le cas contraire, les étapes E13 à E18 sont répétées pour au moins un autre signal de référence RS2 à RS4, par exemple le signal RS2, puis pour des trames suivantes en nombre prédéterminé, comme pour la deuxième variante, jusqu'à ce que l'unité VSB valide des identités NRB_{NB,sup} = NRBrₛᵤₚ et NRB_{NB,inf}= NRBr_{inf}. Sinon, le mobile MB_{BB} cherche à s'attacher à une autre station de base du réseau R_{BB}.

La quatrième variante est encore relative aux valeurs de NRB au moins égale à 15. L'information supplémentaire IS repose sur les 10 bits bd_{PBCH} qui sont divisés en trois indicateurs. Le premier indicateur possède 2 bits et indique le nombre NRB_{NB,c} de sous-bandes RB_{NB} occupant dans des blocs de la bande centrale ΔF_{C} par le réseau à bande étroite R_{NB}. Le deuxième indicateur possède 4 bits et indique le nombre NRB_{NB,UP} de sous-bandes RB_{NB} dans la bande supérieure ΔF_{UP}. Le troisième indicateur possède 4 bits et indique le nombre NRB_{NB,LOW} de sous-bandes RB_{NB} dans la bande inférieure ΔF_{LOW}. Bien que les deuxième et troisième indicateurs NRB_{NB,UP} et NRB_{NB,LOW} soient au plus égal à 2⁴-1 = 15 et donc inférieur à (NRB - 6)/2 ou (NRB - 8)/2 pour la configuration LTE avec ΔF_{BB} égale à 10 MHz, 15 MHz, ou 20 MHz, un maximum de 30+3 = 33 sous-bandes rejetées dans la bande ΔF_{BB} pour une occupation par le réseau à bande étroite R_{NB} est considéré en pratique comme suffisant. Dans cette quatrième variante, l'unité VSB compte les sous-bandes rejetées dans les bandes ΔF_{C}, ΔF_{UP} et ΔF_{LOW} et compare les nombres obtenus NRBr_{NB,C}, NRBr_{NB,UP} et NRBr_{NB,LOW} respectivement aux nombres NRB_{NB,C}, NRB_{NB,UP} et NRB_{NB,LOW}. L'unité VSB valide les positions des sous-bandes acceptées et rejetées si les nombres NRBr_{NB,C} et NRB_{NB,C} sont égaux, les nombres NRBr_{NB,UP} et NRB_{NB,UP} sont égaux et les nombres NRB_{NB,inf} et NRBr_{inf} sont égaux. Dans le cas contraire, les étapes E13 à E18 sont répétées pour au moins un autre signal de référence RS2 à RS4, par exemple le signal RS2, puis pour des trames suivantes en nombre prédéterminé, comme pour la deuxième ou troisième variante,

Pour toutes ces variantes, le mobile de l'invention fonctionne aussi avec une station de base du réseau à large bande selon la technique antérieure, ou lorsqu'aucune station de base du réseau à bande étroite n'émet.

Après l'étape de validation E18, le mobile MB_{BB} selon l'invention a acquis la position des "trous" correspondant aux NRB_{NB} sous-bandes du réseau à bande étroite dans la bande ΔF_{BB} et remplace le nombre NRB de sous-bandes initiales dans la bande ΔF_{BB} par le nombre NRBa = NRB_{BB} de sous-bandes acceptées validées RB_{BB} et les renumérote de 1 à NRBa, à l'étape E19. La renumérotation est alors en accord avec les numéros des sous-bandes RB_{NB} utilisés dans la station de base BS_{NB} pour l'allocation de blocs de ressource dans les sous-bandes RB_{NB}. Ceci permet au mobile d'acquérir les ressources radio des autres canaux de signalisation, en particulier le canal PDCCH pour l'allocation de ressource radio, distribués seulement dans les sous-bandes acceptées validées RB_{BB} de la bande centrale ΔF_{C} des trames descendantes TP1_{DL} émises par la station de base BS_{BB}. Les ressources radio des canaux de signalisation acquises sont ensuite traitées dans le mobile selon la technologie LTE.

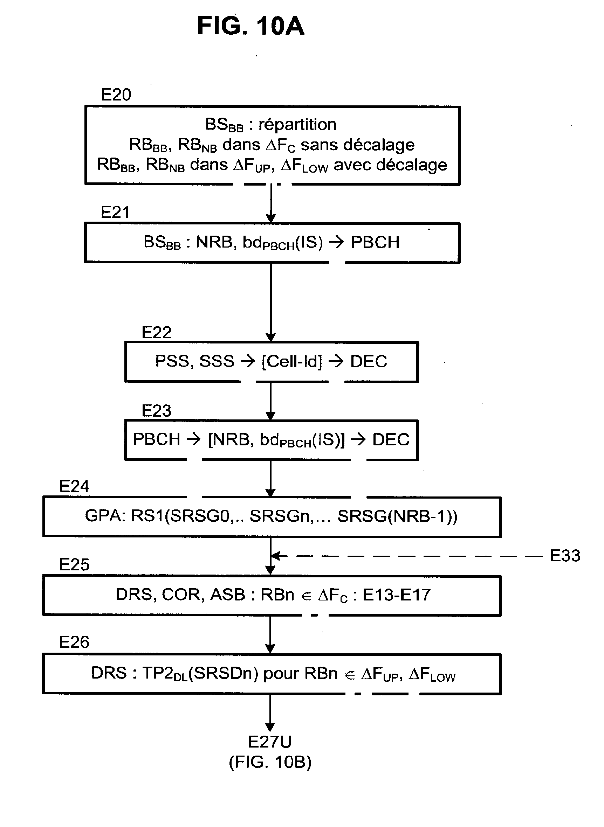

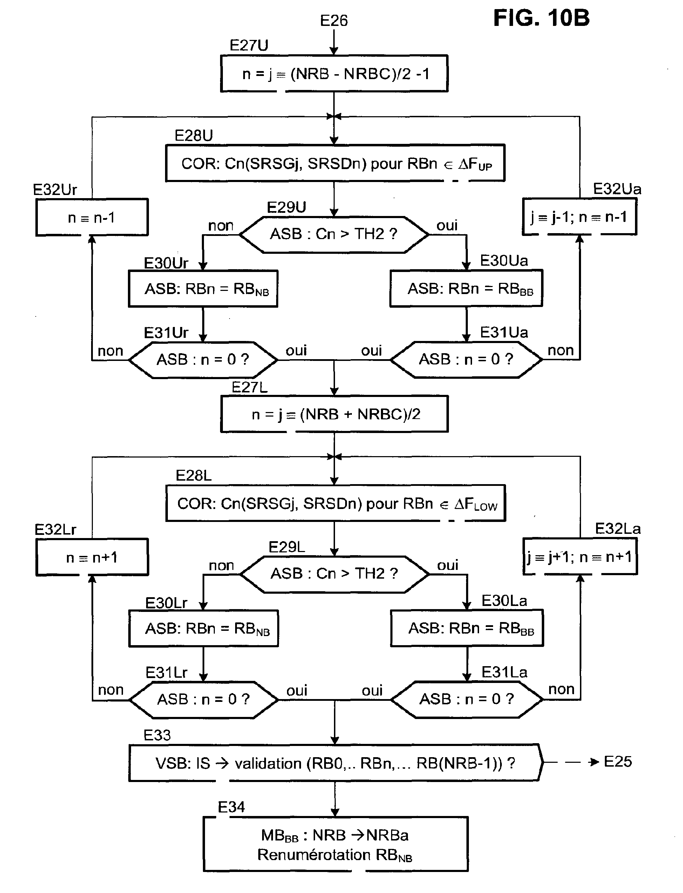

Selon la deuxième réalisation de l'invention, le procédé d'acquisition de ressource radio comprend des étapes E22 à E34 montrées aux figures 10A et 10B, qui sont exécutées pour des trames descendantes TP2_{DL} reçues dans le mobile MB_{BB} lors d'une phase de synchronisation. Dans cette deuxième réalisation, la station de base BS_{BB} fonctionne selon la technologie LTE décrite précédemment avec les modifications suivantes établies à des étapes initiales E20 et E21 précédant les étapes E22 à E34.

A l'étape E20, la station de base BS_{BB} pré-mémorise les caractéristiques du partage de la bande de fréquence ΔF_{BB} afin que l'interface radio de la station de base n'émette aucun signal dans les sous-bandes RB_{NB} réservées au réseau à bande étroite R_{NB} et incluses dans la bande utile ΔF_{BB} et ainsi émette des trames "perforées" TP2_{DL}. La station de base BS_{BB} continue à établir sans changement les séquences des signaux de synchronisation SSS et PSS et des signaux de référence RS et les 14 bits utiles du message du canal PBCH dans la bande centrale ΔF_{C}, après avoir retiré le contenu des sous-bandes RB_{NB} pour former des "trous". Ceci assure l'usage correct des éléments de signal de référence inclus dans la bande centrale ΔF_{C} pour démoduler le canal PBCH. De même, des "trous" correspondant à des sous-bandes RB_{NB} sont formés dans la bande supérieure ΔF_{UP} et la bande inférieure ΔF_{LOW}.

En revanche, comparativement à la première réalisation, les sous-séquences de signal de référence initialement contenues dans les sous-bandes RB_{BB} de la bande supérieure ΔF_{UP} de la trame connue LTE TR_{DL} sont transférées successivement dans les sous-bandes restantes RB_{BB} de la bande supérieure ΔF_{UP} de la trame "perforée" TP2_{DL} à émettre par la station de base BS_{BB}, en commençant par la sous-bande inférieure de la bande ΔF_{UP} suivant l'ordre croissant des fréquences. De manière similaire, les sous-séquences de signal de référence initialement contenues dans les sous-bandes RB_{BB} dans la bande inférieure ΔF_{LOW} de la trame connue LTE TR_{DL} sont transférées successivement dans les sous-bandes restantes RB_{BB} de la bande inférieure ΔF_{LOW} de la trame "perforée" TP2_{DL} à émettre par la station de base BS_{BB}, en commençant par la sous-bande supérieure de la bande ΔF_{LOW} suivant l'ordre décroissant des fréquences.

Sur la base d'un exemple d'une trame LTE TR_{DL} montrée à gauche dans la figure 9, comprise dans une bande ΔF_{BB} de largeur NRB = 15 blocs de ressource RB et ayant une bande centrale ΔF_{C} de largeur NRB = 7 blocs de ressource RB, la figure 9 montre à droite une trame "perforée" TP2_{DL} selon l'invention ayant:
- une bande centrale ΔF_{C} comportant un "trou" RB_{NB} qui est situé à la position 06, et des sous-bandes RB_{BB} qui sont situées aux positions 04, 05 et 07, 08, 09 et 10 et supportent les signaux de synchronisation SSS et PSS et des signaux de référence RS et le message du canal PBCH comme dans la trame TR_{DL};
- une bande supérieure ΔF_{UP} comportant deux "trous" séparés RB_{NB} qui sont situés aux positions 03 et 01 de la trame TR_{DL}, et des sous-bandes RB_{BB} qui sont situées aux positions 02 et 00 de la trame TR_{DL} et contiennent les éléments de ressource de signal de référence RS contenus dans les sous-bandes RB_{BB} situées aux positions successives 03 et 02; et
- une bande inférieure ΔF_{LOW} comportant deux "trous" contigus RB_{NB} qui sont situés aux positions 11 et 12 de la trame TR_{DL}, et des sous-bandes RB_{BB} qui sont situées aux positions 13 et 14 de la trame TR_{DL} et contiennent les éléments de ressource de signal de référence RS contenus dans les sous-bandes RB_{BB} situées aux positions successives 11 et 12.

A l'étape E21 similaire à l'étape E02, la station de base introduit une information supplémentaire IS dans les 10 bits disponibles bd_{PBCH} du message à 24 bits du canal PBCH.

Au début de la phase de synchronisation du mobile MB_{BB}, les étapes E22 et E23 sont similaires aux étapes E10 et E11 selon la première réalisation. Le détecteur DEC dans le mobile MB_{BB} détecte l'identificateur Cell-Id de la cellule radio couverte par la station de base BS_{BB} dans les signaux de synchronisation PSS et SSS et extrait du message à 24 bits décodé dans le canal PBCH le nombre NRB de sous-bandes dans une trame descendante TR_{DL}. Le détecteur DEC déduit du message extrait la largeur de la bande de fréquence ΔF_{BB} utilisée par la station de base BS_{BB} et le nombre NRB_{C} de sous-bandes supportant les canaux de signalisation communs dans la bande centrale ΔF_{C}. Le détecteur DEC extrait également les informations supplémentaires IS dans les bits disponibles bd_{PBCH} du message décodé.

Comme dans la première réalisation, la recherche des sous-bandes RB_{BB} étant identique par rapport à n'importe lequel des signaux de référence RS1 à RS4, les étapes suivantes E24 à E28 peuvent être basées sur le signal de référence RS1 du premier port d'antenne obligatoire t1.

A l'étape E24 similaire à l'étape E12 selon la première réalisation, les éléments de la séquence spécifique du signal de référence RS1 sont générés par le générateur pseudo-aléatoire GPA dans le mobile MB_{BB} en fonction de l'identificateur Cell-Id et des nombres NRB et NBR_{C} définissant la bande de fréquence ΔF_{BB} et enregistrés dans la mémoire ME à l'étape E23. Les éléments de la séquence du signal de référence RS1 attendus dans la bande centrale ΔF_{C} sont groupés en NRB_{C} sous-séquences de référence SRSGn dans la mémoire ME, avec (NRB - NRB_{C})/2 ≤ n ≤ (NRB + NRB_{C})/2 - 1 selon la convention de numérotage de sous-bande précitée. Les éléments de la séquence du signal de référence RS1 attendus dans les bandes supérieure ΔF_{UP} et inférieure ΔF_{LOW} sont groupés en NRB - NRB_{C} sous-séquences de référence SRSGn dans la mémoire ME, avec 0 ≤ n ≤ (NRB - NRB_{C})/2 - 1 et (NRB + NRB_{C})/2 ≤ n ≤ NRB - 1.

A l'étape E25, le positionnement des NRB_{C} sous-bandes dans la bande centrale ΔF_{C} de la trame TP1_{DL} n'étant pas affecté par un quelconque décalage fréquentiel, comme pour les sous-bandes selon la première réalisation, le détecteur DRS, le corrélateur COR et l'unité d'acquisition ASB appliquent les étapes E13 à E17 à la bande centrale ΔF_{C} pour détecter les éléments de ressource ER situés aux positions des éléments du signal de référence RS1 dans toutes les sous-bandes de la bande centrale ΔF_{C} pendant la période de la trame descendante TP2_{DL} reçue par le mobile MB_{BB}, déterminer des coefficients de corrélation Cn pour chaque couple de sous-séquences de référence générée et détectée SRSGn et SRSDn associé aux sous-bandes de la bande centrale ΔF_{C}, comparer ces coefficients de corrélation Cn au seuil TH1, et en déduire les positions de sous-bandes acceptées et les positions de sous-bandes rejetées dans la bande centrale ΔF_{C} à écrire dans la mémoire ME.

Le cas échéant, l'étape E25 est complétée par l'étape E18 pour valider les positions des sous-bandes acceptées et rejetées sur la base d'informations supplémentaires IS extraites des 10 bits disponibles bd_{PBCH} du canal PDCH à l'étape E23. Par exemple, la station de base introduit une information supplémentaire IS dans les 10 bits disponibles bd_{PBCH} du message à 24 bits du canal PBCH qui servent à valider notamment des "trous" dans la bande centrale ΔF_{C} détectés par le mobile MB_{BB} et devant correspondre respectivement aux sous-bandes RB_{NB} du réseau à bande étroite. Comme le nombre de trous possibles dans la bande centrale ΔF_{C} est au plus égal à la partie entière de NRB_{C}/2, soit 3 selon la figure 9, et est donc petit, la première variante selon la première réalisation peut être utilisée pour indiquer précisément les positions des sous-bandes dans la bande centrale ΔF_{C} et leurs affectations à des sous-bandes RB_{NB} et des sous-bandes RB_{BB} par les rangs et les états des NRB_{C} bits de poids fort des 10 bits disponibles bd_{PBCH}. Selon l'exemple de la figure 9, les 7 bits de poids fort bd_{PBCH} sont "1101111" et le bit "0" correspond à la sous-bande RB_{NB} à la position 06.

Puis à l'étape E26 concomitante à l'étape E24, le détecteur DRS détecte et échantillonne les éléments de ressource ER situés aux positions des éléments du signal RS1 dans les bandes supérieure ΔF_{UP} et inférieure ΔF_{LOW} de la trame descendante TP2_{DL} reçue par le mobile MB_{BB}. Les éléments détectés du signal RS1 contenus dans chaque sous-bande RBn de la trame TP2_{DL}, avec 0 ≤ n ≤ (NRB - NRB_{C})/2 - 1 et (NRB + NRB_{C})/2 ≤ n ≤ NRB - 1, sont groupés successivement en des sous-séquences de référence détectées SRSDn qui sont enregistrées dans la mémoire ME.

Les étapes suivantes E27U à E32U sont récurrentes pour que le mobile analyse successivement les sous-séquences de référence SRSDj incluses respectivement dans les sous-bandes RBn de la bande supérieure ΔF_{UP} émises dans la trame TP2_{DL} par la station de base BS_{BB}, avec 0 ≤ n ≤ (NRB - NRB_{C})/2 - 1 et j ≥ n. La récurrence commence par la sous-bande inférieure RBn de la bande ΔF_{UP} avec l'indice n = j ≡ (NRB - NRB_{C})/2 - 1, à l'étape E27U. A l'étape E28U, le corrélateur COR détermine un coefficient de corrélation Cn pour le couple de sous-séquences de référence générée et détectée SRSGj et SRSDn avec n = j ≡ (NRB - NRB_{C})/2 - 1. L'unité d'acquisition de position de sous-bande ASB compare le coefficient de corrélation Cn à un seuil prédéterminé TH2 à l'étape E29U. Si le coefficient de corrélation Cn excède le seuil TH2, l'unité ASB accepte la sous-bande RBn comme l'une des sous-bandes RB_{BB} dans laquelle la station de base BS_{BB} émet et aucune station BS_{NB} du réseau à bande étroite R_{NB} n'émet, et écrit dans la mémoire ME le numéro n correspondant à la position de la sous-bande RBn acceptée dans la bande ΔF_{UP}, à l'étape E30Ua. Puis l'unité ASB décrémente les indices j et n en j-1 et n-1 à une étape E32Ua si l'indice n n'est pas zéro à l'étape E31 Ua. Si Cn ≤ TH2 à l'étape E29U, l'unité ASB rejette la sous-bande RBn comme l'une des sous-bandes RB_{NB} réservées au réseau à bande étroite R_{NB} dans lesquelles la station de base BS_{BB} n'émet pas, et écrit dans la mémoire ME le numéro n correspondant à la position de la sous-bande RBn rejetée de la bande ΔF_{UP}, à l'étape E30Ur. Puis l'unité ASB décrémente seulement l'indice n en n-1 à une étape E32Ur si l'indice n n'est pas zéro à une étape E31 Ur. Après les étapes E32Ua et E32Ur, le procédé retourne à l'étape E28U.

La valeur de l'indice j est maintenu à l'étape E32Ur pour qu'à la prochaine étape E28U le corrélateur COR détermine un coefficient de corrélation C(n-1) entre la sous-séquence de référence générée SRSGj qui n'a pas été trouvée par l'unité ASB dans la sous-bande RBn explorée précédemment et la sous-séquence de référence SRSD(n-1) détectée dans la sous-bande suivante RB(n-1) à explorer. Tant que la sous-séquence de référence générée SRSGj n'a pas été trouvée dans des sous-bandes suivantes RB_{NB} attribuées au réseau à bande étroite et correspondant à des trous dans la trame reçue TP1_{DL}, l'indice j est maintenu et le mobile recherche la prochaine sous-bande RB_{BB} émise par la station de base BS_{BB} du réseau à large bande.

Par contre, la valeur de l'indice j est décrémenté à l'étape E32Ua pour qu'à la prochaine étape E28U le corrélateur COR détermine un coefficient de corrélation C(n-1) entre la prochaine sous-séquence de référence générée SRSG(j-1) qui est à trouver par l'unité ASB dans la sous-bande suivante RB(n-1) à explorer, et le cas échéant dans d'autres sous-bandes successives suivantes, et la sous-séquence de référence détectée SRSD(n-1) dans la sous-bande suivante RB(n-1) à explorer.

Lorsqu'à l'une des étapes E31 Ua et E31 Ur, l'indice n est zéro, l'exploration de la bande supérieure ΔF_{UP} dans la trame TP2_{DL} reçue par le mobile MB_{BB} est terminée. Le procédé passe à l'exploration de la bande inférieure ΔF_{LOW} de la trame reçue TP2_{DL} selon des étapes E27L à E31 La-E31 Lr similaires aux étapes précédentes E27U à E31 Ua-E31 Ur. La récurrence commence par la sous-bande supérieure RBn de la bande ΔF_{LOW} avec l'indice n = j ≡ (NRB + NRB_{C})/2, à l'étape E27L. Les étapes suivantes E28L à E32La-E32Lr sont récurrentes pour que le mobile analyse successivement les sous-séquences de référence détectées SRSDn incluses respectivement dans les sous-bandes RBn de la bande inférieure ΔF_{LOW}. L'indice n est incrémenté aux étapes E32La et E32Lr et l'indice j est incrémenté seulement à l'étape E32La, depuis les valeurs initiales à l'étape E27L.

En variante, les explorations des bandes supérieure et inférieure ΔF_{UP} et ΔF_{LOW} sont exécutées en parallèle.

Dans la seconde réalisation du procédé, les sous-bandes RB_{BB} émises par la station de base BS_{BB} sont avantageusement acquises plus rapidement et de manière plus fiable.

Eventuellement, des informations supplémentaires IS dans les 10 bits disponibles bd_{PBCH} du message du canal PBCH, comme selon les variantes de la première réalisation, peuvent être acquises par le mobile pour valider définitivement la position des sous-bandes acceptées RB_{BB} et leur nombre NRBa et la position des sous-bandes rejetées RB_{NB} et leur nombre NRBr par l'unité VSB, à l'étape E33 similaire à l'étape E18.

Après l'exploration des bandes supérieure et inférieure ΔF_{UP} et ΔF_{LOW}, le mobile MB_{BB} ayant acquis les positions des sous-bandes RB_{NB} du réseau à bande étroite dans la bande ΔF_{BB} et les positions des sous-bandes RB_{BB} émises par la station de base BS_{BB} dans la bande ΔF_{BB} actualise le nombre NRB de sous-bandes initiales dans la bande ΔF_{BB} par la somme des nombres NRBa de sous-bandes RB_{BB} acceptées dans les bandes ΔF_{C}, ΔF_{UP} et ΔF_{LOW} et les renumérote, à l'étape E34, comme à l'étape E19.

Selon des variantes des réalisations précédentes, la station de base BS_{BB} est sectorisée en 3 secteurs par exemple et émet dans la bande centrale ΔF_{C} pour chaque secteur, considéré comme une cellule du réseau R_{BB}, un ensemble de signaux et canaux comprenant notamment des signaux de synchronisation PSS et SSS, un ou des signaux de référence RS et un canal de diffusion physique PBCH. Un mobile selon l'invention est apte à acquérir la répartition des sous-bandes RB_{BB} et RB_{NB} spécifique à chaque secteur selon le procédé de l'invention.

Dans les mobiles selon l'invention s'attachant à la station de base BS_{BB}, la répartition des sous-bandes RB_{BB} acquise dans la bande ΔF_{BB} = ΔF_{DOWNLink} des trames descendantes émises par la station de base BS_{BB} est reportée de manière similaire dans la bande ΔF_{UPLink} des trames montantes à recevoir par la station de base BS_{BB}. En effet, le réseau à large bande R_{BB} fonctionne en mode duplex à division de fréquence FDD selon lequel les bandes ΔF_{DOWNLink} et ΔF_{DOWNLink} sont séparées par un intervalle duplex de fréquence et organisées de la même manière. Par exemple un mobile MS_{BB} reçoit de la station de base BS_{BB} la liste des blocs de ressource alloués dans lesquels le mobile MS_{BB} est autorisé à émettre vers la station de base. Si certains blocs de ressource alloués sont inclus dans des sous-bandes RB_{NB} du réseau à bande étroite, le mobile MS_{BB} ne transmet aucune information dans les sous-bandes interdites des trames montantes et ne distribue les données qu'il doit transmettre que dans les sous-bandes acceptées RB_{BB} des trames montantes.

Bien que l'invention ait été décrite dans le cadre d'un réseau à large bande selon la technologie LTE, l'invention s'applique également à un réseau de radiocommunications cellulaire à large bande par exemple selon technologie WiMAX mobile ("Worldwide interoperability for Microwave Access" en anglais) avec une largeur de bande ΔF_{BB} de quelques dizaines de MHz. Par exemple, la bande ΔF_{BB} est de 20 MHz sur NSP_{BB} = 2048 sous-porteuses et les trames sont du type à accès OFDMA. Un bloc de ressources RB_{DL} alloué à des données d'un terminal mobile et des symboles de référence (pilotes) comprend 2 clusters chacun ayant 4 symboles de référence et s'étalant sur 14 sous-porteuses contigües de largeur δf = 10,94 kHz sélectionnées dans la bande ΔF_{BB}, soit NSP_{RB} = 28, et sur une fente temporelle commune de 2 périodes de symboles chacune de Ts = 102,9 µs. La trame comprend 20 fentes temporelles et a une durée de 10 ms.

L'invention décrite concerne un procédé et un mobile pour acquérir des sous-bandes dans une trame par le mobile. Selon une implémentation, des étapes du procédé de l'invention sont déterminées par les instructions d'un programme d'ordinateur incorporé dans le mobile. Le programme apte à être mis en oeuvre dans le mobile de l'invention comporte des instructions de programme qui, lorsque ledit programme est exécuté dans le mobile dont le fonctionnement est alors commandé par l'exécution du programme, réalisent des étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitement de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention. Le programme peut être téléchargé dans la station de base via un réseau de communication, comme internet.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur, ou bien un microfilm ou des cartes perforées.

## Revendications

1. Procédé dans un mobile (MB_{BB}) pour acquérir des premières sous-bandes (RB_{BB}) dans au moins une portion (ΔF_{C}) d'une large bande de fréquence (ΔF_{BB}), une première station de base (BS_{BB}) émettant des trames réparties en temps et dans les premières sous-bandes (RB_{BB}) et supportant un message (PBCH) incluant le nombre (NRB) de sous-bandes (RB_{BB}, RB_{NB}) dans la large bande, et étant localisée à proximité d'une deuxième station de base (BS_{NB}) émettant dans des deuxièmes sous-bandes (RB_{NB}) incluses dans la large bande de fréquence et différentes des premières sous-bandes, au moins l'une des deuxièmes sous-bandes (RB_{NB}) étant incluse dans la portion de large bande, et les sous-bandes ayant la même largeur, **caractérisé en ce qu'**il comprend dans le mobile (MB_{BB})
une division (E12; E24) d'un signal de référence (RS1) généré dans le mobile en des sous-séquences générées (SRSGn) respectivement associées aux sous-bandes (RB_{BB}, RB_{NB}) de la large bande (ΔF_{BB}) dont la largeur est déduite du nombre de sous-bandes (NRB) dans le message (PBCH),
une détection (E13; E26) d'éléments de ressource inclus à des positions prédéterminées dans toutes les sous-bandes de la portion de large bande (ΔF_{C}) pour chaque trame (TP1_{DL}; TP2_{DL}) émise par la première station de base (BS_{BB}),
un groupement (E13; E26) des éléments de ressource respectivement détectés dans les sous-bandes de la portion de large bande en des sous-séquences détectées (SRSDn),
une détermination (E14; E24) de coefficients (Cn) représentatifs de corrélations entre les sous-séquences générées (SRSGn) et les sous-séquences détectées (SRSDn) respectivement associées aux sous-bandes (RB_{BB}, RB_{NB}) de la portion de large bande (ΔF_{C}), et
une acquisition (E16, E17; E24) des positions des premières sous-bandes (RB_{BB}) dans la portion de large bande (ΔF_{C}) pour des coefficients associés supérieurs à un seuil prédéterminé et des positions des deuxièmes sous-bandes (RB_{NB}) dans la portion de large bande pour des coefficients associés au plus égaux au seuil prédéterminé.

2. Procédé selon la revendication 1, selon lequel la détection (E13), le groupement (E13), la détermination (E14) et l'acquisition (E16, E17) sont appliquées à toutes les sous-bandes (RB_{BB}, RB_{NB}) de la large bande de fréquence (ΔF_{BB}) afin d'acquérir les positions des premières sous-bandes (RB_{BB}) dans la large bande (ΔF_{BB}) pour des coefficients associés supérieurs au seuil prédéterminé et des positions des deuxièmes sous-bande (RB_{NB}) dans la large bande pour des coefficients associés au plus égaux au seuil prédéterminé.

3. Procédé selon la revendication 1, selon lequel ladite portion de large bande est une bande centrale (ΔF_{C}) de la large bande de fréquence (ΔF_{BB}).

4. Procédé selon la revendication 3, comprenant
dans la première station de base (BS_{BB}), un transfert (E20) de sous-séquences de signal de référence initialement à répartir dans toutes les sous-bandes d'une bande (ΔF_{UP}) supérieure à la bande centrale (ΔF_{C}) de chaque trame, successivement dans les premières sous-bandes (RB_{NB}) de la bande supérieure de la trame (TP2_{DL}) suivant l'ordre croissant des fréquences, et un transfert (E20) de sous-séquences de signal de référence initialement à répartir dans toutes les sous-bandes d'une bande (ΔF_{LOW}) inférieure à la bande centrale (ΔF_{C}) de chaque trame, successivement dans les premières sous-bandes (RB_{NB}) de la bande inférieure de la trame (TP2_{DL}) suivant l'ordre décroissant des fréquences, et
dans le mobile (MB_{BB}), une détection (E26) des éléments de ressource inclus aux positions prédéterminées dans toutes les sous-bandes des bandes supérieure et inférieure (ΔF_{UP}; ΔF_{LOW}) pendant la période de la trame reçue (TP2_{DL}), et un groupement (E26) des éléments de ressource respectivement détectés dans les sous-bandes des bandes supérieure et inférieure (ΔF_{UP}; ΔF_{LOW}) en des sous-séquences détectées (SRSDn), et
pour chacune (RBn) des bandes supérieure et inférieure (ΔF_{UP}; ΔF_{LOW}), les étapes récurrentes suivantes pour chaque sous-bande, en commençant par la sous-bande inférieure de la bande supérieure (ΔF_{UP}) ou par la sous-bande supérieure de la bande inférieure (ΔF_{LOW}):
une détermination (E28U; E28L) d'un coefficient (Cn) représentatif de la corrélation entre la sous-séquences générée (SRSGj) associée à ladite chaque sous-bande et la sous-séquence (SRSDn) détectée dans ladite chaque sous-bande,
une acquisition (E29U-E30Ua; E29L-E30La) de la position de ladite chaque sous-bande comme première sous-bande (RB_{BB}) lorsque le coefficient (Cn) est supérieur à un deuxième seuil prédéterminé, la sous-bande succédant à ladite chaque sous-bande dans la bande supérieure ou inférieure devenant ladite chaque sous-bande pour la récurrence suivante, et
une acquisition (E29U-E30Ur; E29L-E30Lr) de la position de ladite chaque sous-bande comme deuxième sous-bande (RB_{BB}) lorsque le coefficient (Cn) est au plus égal au deuxième seuil prédéterminé, ladite chaque sous-bande dans la bande supérieure ou inférieure étant maintenue pour la récurrence suivante.

5. Procédé selon la revendication 2 ou 4, comprenant une détection (E11) du nombre (NRB_{BB}) de premières sous-bandes dans la large bande de fréquence (ΔF_{BB}) dans ledit message (PBCH, IS), et une validation (E18) des premières sous-bandes ayant des positions acquises si le nombre (NRBa) de celles-ci est égal au nombre détecté (NRB_{BB})

6. Procédé selon la revendication 2 ou 4, comprenant une détection (E11) des nombres de deuxièmes sous-bandes respectivement dans deux parties complémentaires (ΔFₛᵤₚ; ΔF_{,inf}) de la large bande de fréquence (ΔF_{BB}) dans ledit message (PBCH, IS), et une validation (E18) des positions acquises des premières et deuxièmes sous-bandes si les nombres de deuxièmes sous-bandes ayant des positions acquises dans les parties complémentaires sont respectivement égaux aux nombres détectés de deuxièmes sous-bandes dans les parties complémentaires.

7. Procédé selon la revendication 2 ou 4, comprenant une détection (E11) des nombres de deuxièmes sous-bandes respectivement dans une bande centrale (ΔF_{C}) et des bandes supérieure et inférieure (ΔF_{UP}; ΔF_{LOW}) composant la large bande de fréquence (ΔF_{BB}) dans ledit message (PBCH, IS), et une validation (E18) des positions acquises des premières et deuxièmes sous-bandes si le nombre de deuxièmes sous-bandes ayant des positions acquises dans la bande centrale est égal au nombre détecté de deuxièmes sous-bandes dans la bande centrale, le nombre de deuxièmes sous-bandes ayant des positions acquises dans la bande supérieure est égal au nombre détecté de deuxièmes sous-bandes dans la bande supérieure et le nombre de deuxièmes sous-bandes ayant des positions acquises dans la bande inférieure est égal au nombre détecté de deuxièmes sous-bandes dans la bande inférieure.

8. Procédé selon l'une des revendications 1 à 7, comprenant un remplacement (E19; E33) du nombre (NRB) de sous-bandes dans la large bande de fréquence (ΔF_{BB}) par le nombre (NRBa) des premières sous-bandes (RB_{BB}) ayant des positions acquises et une renumérotation (E19; E33) des premières sous-bandes (RB_{BB}) ayant des positions acquises.

9. Mobile (MB_{BB}) pour acquérir des premières sous-bandes (RB_{BB}) dans au moins une portion (ΔF_{C}) d'une large bande de fréquence (ΔF_{BB}), une première station de base (BS_{BB}) étant apte à émettre des trames réparties en temps et dans les premières sous-bandes (RB_{BB}) et supportant un message (PBCH) incluant le nombre (NRB) de sous-bandes (RB_{BB}, RB_{NB}) dans la large bande, et apte à être localisée à proximité d'une deuxième station de base (BS_{NB}) apte à émettre dans des deuxièmes sous-bandes (RB_{NB}) incluses dans la large bande de fréquence et différentes des premières sous-bandes, au moins l'une des deuxièmes sous-bandes (RB_{NB}) étant incluse dans la portion de large bande, et les sous-bandes ayant la même largeur, **caractérisé en ce qu'**il comprend
un moyen (GPA, ME) pour diviser un signal de référence (RS1) généré dans le mobile en des sous-séquences générées (SRSGn) respectivement associées aux sous-bandes (RB_{BB}, RB_{NB}) de la large bande (ΔF_{BB}) dont la largeur est déduite du nombre de sous-bandes (NRB) dans le message (PBCH),
un moyen (DRS) pour détecter des éléments de ressource inclus à des positions prédéterminées dans toutes les sous-bandes de la portion de large bande (ΔF_{C}) pour chaque trame (TP1_{DL}; TP2_{DL}) à émettre par la première station de base (BS_{BB}),
un moyen (DRS, ME) pour grouper des éléments de ressource respectivement détectés dans les sous-bandes de la portion de large bande en des sous-séquences détectées (SRSDn),
un moyen (COR) pour déterminer des coefficients (Cn) représentatifs de corrélations entre les sous-séquences générées (SRSGn) et les sous-séquences détectées (SRSDn) respectivement associées aux sous-bandes (RB_{BB}, RB_{NB}) de la portion de large bande (ΔF_{C}), et
un moyen (ASB) pour acquérir des positions des premières sous-bandes (RB_{BB}) dans la portion de large bande (ΔF_{C}) pour des coefficients associés supérieurs à un seuil prédéterminé et des positions des deuxièmes sous-bande (RB_{NB}) dans la portion de large bande pour des coefficients associés au plus égaux au seuil prédéterminé.

10. Réseau de radiocommunications à large bande (R_{BB}) comprenant des stations de base (BS_{BB}) et des mobiles (MB_{BB}) aptes à mettre en oeuvre le procédé selon l'une des revendications 1 à 8.

11. Programme d'ordinateur apte à être mis en oeuvre dans un mobile (MB_{BB}), ledit programme étant **caractérisé en ce qu'**il comprend des instructions qui, lorsque le programme est exécuté dans le mobile, réalisent des étapes du procédé selon l'une des revendications 1 à 8.

## Patentansprüche

1. Verfahren in einem Mobilgerät (MB_{BB}) zur Erfassung von ersten Teilbändern (RB_{BB}) in mindestens einem Teilbereich (ΔF_{C}) eines Frequenzbreitbandes (ΔF_{BB}), wobei eine erste Basisstation (BS_{BB}) Datenframes aussendet, die zeitlich und in den ersten Teilbändern (RB_{BB}) verteilt sind, wobei sie als Träger für eine Nachricht (PBCH) dienen, welche die Anzahl (NRB) von Teilbändern (RB_{BB}, RB_{NB}) innerhalb des Breitbandes enthält, und wobei sie in der Nähe einer zweiten Basisstation (BS_{NB}) gelegen ist, die in zweiten Teilbändern (RB_{NB}) aussendet, die in dem Frequenzbreitband enthalten sind und sich von den ersten Teilbändern unterscheiden, wobei mindestens eines der zweiten Teilbänder (RB_{NB}) in dem Breitbandteilbereich enthalten ist und wobei die Teilbänder dieselbe Breite aufweisen, **dadurch gekennzeichnet, dass** es in dem Mobilgerät (MB_{BB}) Folgendes umfasst:
- eine Aufteilung (E12; E24) eines in dem Mobilgerät erzeugten Referenzsignals (RS1) in erzeugte Teilsequenzen (SRSGn), die jeweils den Teilbändern (RB_{BB}, RB_{NB}) des Breitbandes (ΔF_{BB}) zugehörig sind, wobei deren Breite sich aus der Anzahl der Teilbänder (NRB) in der Nachricht (PBCH) ableitet,
- eine Detektion (E13; E26) von Ressourcenelementen, die an vorgegebenen Positionen in sämtlichen Teilbändern des Breitbandteilbereichs (ΔF_{C}) enthalten sind, und zwar für jeden Datenframe (TP1_{DL}; TP2_{DL}), der von der ersten Basisstation (BS_{BB}) ausgesendet wird,
- eine Zusammenfassung (E13; E26) der Ressourcenelemente, die jeweils in den Teilbändern des Breitbandteilbereichs detektiert wurden, nach detektierten Teilsequenzen (SRSDn),
- eine Bestimmung (E14; E24) von Koeffizienten (Cn), welche die Korrelationen zwischen den erzeugten Teilsequenzen (SRSGn) und den detektierten Teilsequenzen (SRSDn), die jeweils den Teilbändern (RB_{BB}, RB_{NB}) des Breitbandteilbereichs (ΔF_{C}) zugehörig sind, wiedergeben, und
- eine Erfassung (E16, E17; E24) der Positionen der ersten Teilbänder (RB_{BB}) in dem Breitbandteilbereich (ΔF_{C}), sofern die zugehörigen Koeffizienten einen vorgegebenen Schwellenwert übersteigen, und der Positionen der zweiten Teilbänder (RB_{NB}) in dem Breitbandteilbereich, sofern die zugehörigen Koeffizienten den vorgegebenen Schwellenwert nicht überschreiten.

2. Verfahren nach Anspruch 1, in dem die Detektion (E13), die Zusammenfassung (E13), die Bestimmung (E14) und die Erfassung (E16, E17) auf sämtliche Teilbänder (RB_{BB}, RB_{NB}) des Frequenzbreitbandes (ΔF_{BB}) angewendet werden, um die Positionen der ersten Teilbänder (RB_{BB}) in dem Breitband (ΔF_{BB}) zu erfassen, sofern die zugehörigen Koeffizienten den vorgegebenen Schwellenwert übersteigen, sowie die Positionen der zweiten Teilbänder (RB_{NB}) in dem Breitband, sofern die zugehörigen Koeffizienten den vorgegebenen Schwellenwert nicht überschreiten.

3. Verfahren nach Anspruch 1, in dem es sich bei dem Breitbandteilbereich um ein Mittelband (ΔF_{C}) des Frequenzbreitbandes (ΔF_{BB}) handelt.

4. Verfahren nach Anspruch 3, das Folgendes umfasst:
- in der ersten Basisstation (BS_{BB}) eine schrittweise Übertragung (E20) von Teilsequenzen des Referenzsignals, die ursprünglich innerhalb sämtlicher Teilbänder eines Bandes (ΔF_{UP}) oberhalb des Mittelbandes (ΔF_{C}) jedes Datenframes zu verteilen waren, in die ersten Teilbänder (RB_{NB}) des Oberbandes des Datenframes (TP2_{DL}) in aufsteigender Reihenfolge der Frequenzen, und eine Übertragung (E20) von Teilsequenzen des Referenzsignals, die ursprünglich innerhalb sämtlicher Teilbänder eines Bandes (ΔF_{LOW}) unterhalb des Mittelbandes (ΔF_{C}) jedes Datenframes zu verteilen waren, in die ersten Teilbänder (RB_{NB}) des Unterbandes des Datenframes (TP2_{DL}) in absteigender Reihenfolge der Frequenzen, und
- in dem Mobilgerät (MB_{BB}) eine Detektion (E26) der Ressourcenelemente, die an den vorgegebenen Positionen in sämtlichen Teilbändern der Ober- und Unterbänder (ΔF_{UP}; ΔF_{LOW}) während der Periode des empfangenen Datenframes (TP2_{DL}) enthalten sind, und eine Zusammenfassung (E26) der Ressourcenelemente, die in den jeweiligen Teilbändern der Ober- und Unterbänder (ΔF_{UP}; ΔF_{LOW}) gemäß den detektierten Teilsequenzen (SRSDn) detektiert wurden, und
- für jedes (RBn) der Ober- und Unterbänder (ΔF_{UP}; ΔF_{LOW}) die folgenden, sich für jedes Teilband wiederholenden Schritte, wobei mit dem unteren Teilband des Oberbandes (ΔF_{UP}) oder mit dem oberen Teilband des Unterbandes (ΔF_{LOW}) begonnen wird:
- Bestimmung (E28U; E28L) eines Koeffizienten (Cn), der die Korrelation zwischen den erzeugten Teilsequenzen (SRSGj), die dem betreffenden Teilband zugehörig sind, und der Teilsequenz (SRSDn), die in dem betreffenden Teilband detektiert wurde, wiedergibt,
- Erfassung (E29U-E30Ua, E29L-E30La) der Position des betreffenden Teilbandes als erstes Teilband (RB_{BB}), wenn der Koeffizient (Cn) einen zweiten vorgegebenen Schwellenwert übersteigt, wobei das Teilband, das sich innerhalb des Ober- oder Unterbandes an das betreffende Teilband anschließt, beim nachfolgenden Durchlauf zum betreffenden Teilband wird, und
- Erfassung (E29U-E30Ur, E29L-E30Lr) der Position des betreffenden Teilbandes als zweites Teilband (RB_{BB}), wenn der Koeffizient (Cn) den zweiten vorgegebenen Schwellenwert nicht überschreitet, wobei das betreffende Teilband innerhalb des Ober- oder Unterbandes beim nachfolgenden Durchlauf beibehalten wird.

5. Verfahren nach Anspruch 2 oder 4, das eine Detektion (E11) der Anzahl (NRB_{BB}) an ersten Teilbändern innerhalb des Frequenzbreitbandes (ΔF_{BB}) in der Nachricht (PBCH, IS) umfasst sowie eine Validierung (E18) der ersten Teilbänder mit erfassten Positionen, wenn die Anzahl (NRBa) derselben gleich der detektierten Anzahl (NRB_{BB}) ist.

6. Verfahren nach Anspruch 2 oder 4, das eine Detektion (E11) der jeweiligen Anzahl an zweiten Teilbändern in den beiden komplementären Anschnitten (ΔFₛᵤₚ; ΔF_{inf}) des Frequenzbreitbandes (ΔF_{BB}) in der Nachricht (PBCH, IS) umfasst sowie eine Validierung (E18) der erfassten Positionen der ersten und zweiten Teilbänder, wenn die jeweilige Anzahl an zweiten Teilbändern mit erfassten Positionen in den komplementären Abschnitten gleich der jeweils detektierten Anzahl an zweiten Teilbändern in den komplementären Abschnitten ist.

7. Verfahren nach Anspruch 2 oder 4, das eine Detektion (E11) der jeweiligen Anzahl an zweiten Teilbändern in einem Mittelband (ΔF_{C}) und in den Ober- und Unterbändern (ΔF_{UP}; ΔF_{LOW}) umfasst, aus denen sich das Frequenzbreitband (ΔF_{BB}) in der Nachricht (PBCH, IS) zusammensetzt, sowie eine Validierung (E18) der erfassten Positionen der ersten und zweiten Teilbänder, wenn die Anzahl an zweiten Teilbändern mit erfassten Positionen in dem Mittelband gleich der detektierten Anzahl an zweiten Teilbändern in dem Mittelband ist, die Anzahl an zweiten Teilbändern mit erfassten Positionen in dem Oberband gleich der detektierten Anzahl an zweiten Teilbändern in dem Oberband ist und die Anzahl an zweiten Teilbändern mit erfassten Positionen in dem Unterband gleich der detektierten Anzahl an zweiten Teilbändern in dem Unterband ist.

8. Verfahren nach einem der Ansprüche 1 bis 7, das ein Ersetzen (E19; E33) der Anzahl (NRB) an Teilbändern in dem Frequenzbreitband (ΔF_{BB}) durch die Anzahl (NRBa) an ersten Teilbändern (RB_{BB}) mit erfassten Positionen umfasst sowie eine Neunummerierung (E19, E33) der ersten Teilbänder (RB_{BB}) mit erfassten Positionen.

9. Mobilgerät (MB_{BB}) zur Erfassung von ersten Teilbändern (RB_{BB}) in mindestens einem Teilbereich (ΔF_{C}) eines Frequenzbreitbandes (ΔF_{BB}), wobei eine erste Basisstation (BS_{BB}) dazu geeignet ist, Datenframes auszusenden, die zeitlich und in den ersten Teilbändern (RB_{BB}) verteilt sind, wobei sie als Träger für eine Nachricht (PBCH) dienen, welche die Anzahl (NRB) von Teilbändern (RB_{BB}, RB_{NB}) innerhalb des Breitbandes beinhaltet, und dazu geeignet ist, in der Nähe einer zweiten Basisstation (BS_{NB}) gelegen zu sein, die dazu geeignet ist, in zweiten Teilbändern (RB_{NB}) mindestens eines der zweiten Teilbänder (RB_{NB}) in dem Breitbandteilbereich auszusenden, die in dem Frequenzbreitband enthalten sind und sich von den ersten Teilbändern unterscheiden, und wobei die Teilbänder dieselbe Breite aufweisen, **dadurch gekennzeichnet, dass** es Folgendes umfasst:
- ein Mittel (GPA, ME) zur Aufteilung eines Referenzsignals (RS1), das in dem Mobilgerät erzeugt wird, in erzeugte Teilsequenzen (SRSGn), die jeweils den Teilbändern (RB_{BB}, RB_{NB}) des Breitbandes (ΔF_{BB}) zugehörig sind, wobei deren Breite sich aus der Anzahl der Teilbänder (NRB) in der Nachricht (PBCH) ableitet,
- ein Mittel (DRS) zur Detektion von Ressourcenelementen, die an vorgegebenen Positionen in sämtlichen Teilbändern des Breitbandteilbereichs (ΔF_{C}) enthalten sind, und zwar für jeden Datenframe (TP1_{DL}; TP2_{DL}), der von der ersten Basisstation (BS_{BB}) auszusenden ist,
- ein Mittel (DRS, ME) zur Zusammenfassung der Ressourcenelemente, die jeweils in den Teilbändern des Breitbandteilbereichs detektiert wurden, nach detektierten Teilsequenzen (SRSDn),
- ein Mittel (COR) zur Bestimmung von Koeffizienten (Cn), welche die Korrelationen zwischen den erzeugten Teilsequenzen (SRSGn) und den detektierten Teilsequenzen (SRSDn), die jeweils den Teilbändern (RB_{BB}, RB_{NB}) des Breitbandteilbereichs (ΔF_{C}) zugehörig sind, wiedergeben, und
- ein Mittel (ASB) zur Erfassung der Positionen der ersten Teilbänder (RB_{BB}) in dem Breitbandteilbereich (ΔF_{C}), sofern die zugehörigen Koeffizienten einen vorgegebenen Schwellenwert übersteigen, und der Positionen der zweiten Teilbänder (RB_{NB}) in dem Breitbandteilbereich, sofern die zugehörigen Koeffizienten den vorgegebenen Schwellenwert nicht überschreiten.

10. Breitband-Funkkommunikationsnetz (R_{BB}), das Basisstationen (BS_{BB}) und Mobilgeräte (MB_{BB}) umfasst, die dazu geeignet sind, das Verfahren nach einem der Ansprüche 1 bis 8 durchzuführen.

11. Computerprogramm, das in einem Mobilgerät (MB_{BB}) zum Einsatz gebracht werden kann, wobei das Programm **dadurch gekennzeichnet ist, dass** es Befehle umfasst, welche die Schritte des Verfahren nach einem der Ansprüche 1 bis 8 durchführen, wenn das Programm in dem Mobilgerät ausgeführt wird.

## Claims

1. Method in a mobile (MB_{BB}) for acquiring first subbands (RB_{BB}) in at least a portion (ΔF_{C}) of a broad frequency band (ΔF_{BB}), a first base station (BS_{BB}) transmitting frames which are distributed temporally and in the first subbands (RB_{BB}) and support a message (PBCH) including the number (NRB) of subbands (RB_{BB}, RB_{NB}) in the broadband, and being located in the vicinity of a second base station (BS_{NB}) transmitting in second subbands (RB_{NB}) which are included in the broad frequency band and differ from the first subbands, at least one of the second subbands (RB_{NB}) being included in the broadband portion, and the subbands having the same width, **characterised in that**, in the mobile (MB_{BB}), it comprises:
- dividing (E12; E24) a reference signal (RS1) generated in the mobile into generated subsequences (SRSGn) which are associated respectively with subbands (RB_{BB}, RB_{NB}) of the broadband (ΔF_{BB}) of which the width is deduced from the number of subbands (NRB) in the message (PBCH);
- detecting (E13; E26) resource elements included at predetermined positions in all the subbands of the broadband portion (ΔF_{C}) for each frame (TP1_{DL}; TP2_{DL}) transmitted by the first base station (BS_{BB});
- grouping (E13; E26) resource elements respectively detected in the subbands of the broadband portion into detected subsequences (SRSDn);
- determining (E14; E24) coefficients (Cn) which are representative of correlations between the generated subsequences (SRSGn) and the detected subsequences (SRSDn) respectively associated with the subbands (RB_{BB}, RB_{NB}) of the broadband portion (ΔF_{C}); and
- acquiring (E16, E17; E24) the positions of the first subbands (RB_{BB}) in the broadband portion (ΔF_{C}) for associated coefficients which exceed a predetermined threshold and the positions of the second subbands (RB_{NB}) in the broadband portion for associated coefficients which are at most equal to the predetermined threshold.

2. Method, according to claim 1, wherein the detection (E13), grouping (E13), determination (E14) and acquisition (E16, E17) steps are performed on all the subbands (RB_{BB}, RB_{NB}) of the broad frequency band (ΔF_{BB}) in order to acquire the positions of the first subbands (RB_{BB}) in the broadband (ΔF_{BB}) for associated coefficients which exceed the predetermined threshold and positions of the second subbands (RB_{NB}) in the broadband for associated coefficients which are at most equal to the predetermined threshold.

3. Method according to claim 1, wherein said broadband portion is a central band (ΔF_{C}) of the broad frequency band (ΔF_{BB}).

4. Method according to claim 3, comprising, in the first base station (BS_{BB}), transferring (E20) reference signal subsequences which are to be distributed initially into all the subbands of a band (ΔF_{UP}) above the central band (ΔF_{C}) of each frame and successively into the first subbands (RB_{NB}) of the upper band of the frame (TP2_{DL}) in ascending frequency order, and transferring (E20) reference signal subsequences which are to be distributed initially into all the subbands of a band (ΔF_{LOW}) below the central band (ΔF_{C}) of each frame and successively into the first subbands (RB_{NB}) of the lower band of the frame (TP2_{DL}) in descending frequency order, and, in the mobile (MB_{BB}), detecting (E26) resource elements included at predetermined positions in all the subbands of the upper and lower (ΔF_{UP}; ΔF_{LOW}) bands for the period of the received frame (TP2_{DL}), and grouping (E26) the resource elements respectively detected in the subbands of the upper and lower (ΔF_{UP}; ΔF_{LOW}) bands into detected subsequences (SRSDn), and, for each (RBn) upper and lower band (ΔF_{UP}; ΔF_{LOW}), the following steps which are repeated for each subband, starting with the lower subband of the upper band (ΔF_{UP}) or with the upper subband of the lower band (ΔF_{LOW}):
- determining (E28U; E28L) a coefficient (Cn) which is representative of the correlation between the generated subsequences (SRSGj) associated with said each subband and the detected subsequences (SRSDn) in said each subband;
- acquiring (E29U-E30Ua; E29L-E30La) the position of said each subband as the first subband (RB_{BB}) when the coefficient (Cn) exceeds a second predetermined threshold, the subband which follows said each subband in the upper or lower band becoming said each subband for the next recurrence; and
- acquiring (E29U-E30Ur; E29L-E30Lr) the position of said each subband as the second subband (RB_{BB}) when the coefficient (Cn) is at most equal to the second predetermined threshold, said each subband in the upper or lower band being maintained for the next recurrence.

5. Method according to either claim 2 or claim 4, comprising detecting (E11) the number (NRB_{BB}) of first subbands in the broad frequency band (ΔF_{BB}) in said message (PBCH, IS) and validating (E18) the first subbands occupying acquired positions if the number (NRBa) of said subbands is equal in number to the detected number (NRB_{BB}).

6. Method according to either claim 2 or claim 4, comprising detecting (E11) the numbers of second subbands which are respectively in two complementary parts (ΔFₛᵤₚ; ΔF_{inf}) of the broad frequency band (ΔF_{BB}) in said message (PBCH, IS), and validating (E18) the acquired positions of the first and second subbands if the numbers of second subbands occupying positions acquired in the complementary parts are respectively equal to the detected numbers of second subbands in the complementary parts.

7. Method according to either claim 2 or claim 4, comprising detecting (E11) the numbers of second subbands which are respectively in a central band (ΔF_{C}) and upper and lower bands (ΔF_{UP}; ΔF_{LOW}) making up the broad frequency band (ΔF_{BB}) in said message (PBCH, IS), and validating (E18) acquired positions of the first and second subbands if the number of second subbands occupying positions acquired in the central band is equal to the detected number of second subbands in the central band, the number of second subbands occupying positions acquired in the upper band is equal to the detected number of second subbands in the upper band and the number of second subbands occupying positions acquired in the lower band is equal to the detected number of second subbands in the lower band.

8. Method according to any of claims 1 to 7, comprising replacing (E19; E33) the number (NRB) of subbands in the broad frequency band (ΔF_{BB}) with the number (NRBa) of the first subbands (RB_{BB}) occupying acquired positions and renumbering (E19; E33) the first subbands (RB_{BB}) occupying acquired positions.

9. Mobile (MB_{BB}) for acquiring first subbands (RB_{BB}) in at least a portion (ΔF_{C}) of a broad frequency band (ΔF_{BB}), a first base station (BS_{BB}) being capable of transmitting frames which are distributed temporally and in the first subbands (RB_{BB}) and support a message (PBCH) including the number (NRB) of subbands (RB_{BB}, RB_{NB}) in the broadband, and capable of being located in the vicinity of a second base station (BS_{NB}) capable of transmitting in second subbands (RB_{NB}) which are included in the broad frequency band and differ from the first subbands, at least one of the second subbands (RB_{NB}) being included in the broadband portion, and the subbands having the same width, **characterised in that** it comprises:
- a means (GPA, ME) for dividing a reference signal (RS1) generated in the mobile into generated subsequences (SRSGn) which are associated respectively with subbands (RB_{BB}, RB_{NB}) of the broadband (ΔF_{BB}) of which the width is deduced from the number (NRB) of subbands in the message (PBCH);
- a means (DRS) for detecting resource elements included at predetermined positions in all the subbands of the broadband portion (ΔF_{C}) for each frame (TP1_{DL}; TP2_{DL}) to be transmitted by the first base station (BS_{BB});
- a means (DRS, ME) for grouping resource elements respectively detected in the subbands of the broadband portion into detected subsequences (SRSDn);
- a means (COR) for determining coefficients (Cn) which are representative of correlations between the generated subsequences (SRSGn) and the detected subsequences (SRSDn) respectively associated with subbands (RB_{BB}, RB_{NB}) of the broadband portion (ΔF_{C}); and
- a means (ASB) for acquiring the positions of the first subbands (RB_{BB}) in the broadband portion (ΔF_{C}) for associated coefficients which exceed a predetermined threshold and the positions of the second subbands (RB_{NB}) in the broadband portion for associated coefficients which are at most equal to the predetermined threshold.

10. Broadband radio-communications network (R_{BB}) comprising base stations (BS_{BB}) and mobiles (MB_{BB}) capable of implementing the method according to any of claims 1 to 8.

11. Computer program capable of being implemented in a mobile (MB_{BB}), said program being **characterised in that** it comprises instructions which carry out the steps of the method according to any of claims 1 to 8 when the program is executed in the mobile.
